# EUROPEAN PATENT APPLICATION

(11) **EP 4 733 275 A1**
(43) Date of publication of application: **29.04.2026**
(21) Application number: 25210095.3
(22) Date of filing: 21.10.2025
(51) Int. Cl.: C02F 11/08, C02F 11/125, C02F 11/128, C02F 11/13, C02F 11/16, F26B 9/00, F23G 5/20, C02F 11/00, C02F 11/02, C02F 11/06, C02F 11/12, C02F 11/121, F26B 17/10, F26B 25/00, B01J 19/28

(54) **PLANT AND RELATED PROCESS FOR TREATING ORGANIC MATERIAL**

(30) Priority: 22.10.2024 US 202463710184 P; 18.11.2024 IT 202400025920
(71) Applicant: BioForceTech Corporation, South San Francisco, CA 94080 (US)
(72) Inventor: Thieme, Diego, I-20873 Cavenago di Brianza (MB) (IT); Presezzi, Dario, South San Francisco, CA 94080 (US); Pessina, Stefano, Palo Alto, CA 94303 (US)
(74) Representative: PGA S.p.A., Milano, Succursale di Lugano

(57) **Abstract**

A plant is described for treating organic material, having a reactor configured to dry organic material and a closure device (9) operating on a loading channel (6) for feeding material into the reactor. The closure device is designed to interact with material located at the outlet mouths (7) of the loading channel using separation elements (11). According to further aspects, the system may include an active filter (34) on a gas exhaust duct (30) that directs moisture-rich gases outside the reactor. In addition, the plant may be equipped with one or more suspension systems (57) that connect a frame (56) supporting the reactor to an angular position sensor (59), enabling translational movement of the sensor (59) relative to the frame. In other aspects, a process for treating organic material is provided, which involves loading the material into the reactor in a differentiated manner across two or more zones (3a) within the reactor (2).

## Description

### FIELD OF THE INVENTION

The invention relates to a plant and process for treating organic materials, aimed at reducing the moisture content of the material by using the heat produced by the natural bacterial activity present. The invention may find advantageous application in the field of management and use of civil and industrial sludge from agricultural wastes and civil waste management plants.

### BACKGROUND ART

Plants and related processes are known in the field of organic material treatment. Known methods involve drying organic material to reduce its internal moisture content and consequently its volume, facilitating its disposal.

An example of a plant for treating organic material, e.g., described by WO No. 2019/050716 A1, uses a thermally isolatable reactor to dry organic material. The plant introduces drying gases to help evaporate moisture and removes exhaust gases that are then dispersed into the environment. Although these solutions allow effective drying of organic material, they have several limitations that could be improved. A first area for improvement concerns the management of organic material feed. Current plants experience difficulties in maintaining a steady and smooth flow, which can lead to blockages and accumulation of material within the loading system, necessitating frequent manual intervention to remove excess material. In addition, there is a need to limit the formation and transport of gas mixtures with excessive dusty residues. Exhaust gases, often containing fine particles, can leak into the environment, leading to pollution problems and requiring more efficient solutions for their filtration and management. Another aspect that can be improved concerns the control of a degree of drying of organic material. Known plants do not guarantee a uniform degree of drying in the treated material, affecting the quality of the final product. In summary, existing plants, although capable of treating organic material effectively, are improvable in several aspects, such as related to the management of organic material loading, control of exhaust gases, and control of the degree of drying of the material.

### OBJECT OF THE INVENTION

A general object of the invention is to solve at least one of the drawbacks and/or limitations of the preceding solutions.

A first object of the present invention is to provide a plant that allows effective separation and dosing of organic material to prevent blockages in a feed system of the reactor.

An additional object is to provide a plant that limits the accumulation of organic material in a loading channel for the material, reducing the need for manual intervention to remove excess material.

An auxiliary objective to provide a plant that limits the formation and transport of gas mixtures with excessive dusty residues.

It is also an object of the present invention to provide a plant that can increase the effectiveness and efficiency of the process for treating organic material.

An additional auxiliary object is to provide a plant with improved operational reliability that reduces the service costs of its components, thereby reducing the number of required maintenance work.

It is also an object to ensure that the organic material to be treated reaches a homogeneous moisture content, improving the quality and effectiveness of treatment.

These objects and others, which will appear from the following description, are substantially achieved by a plant and related process of treating organic material according to one or more of the following claims and/or aspects.

### SUMMARY

Aspects of the invention are described below.

In a 1st aspect, a plant of treatment of organic material is provided, including:
- a reactor (2) configured to dry organic material, said reactor (2) having a treatment chamber (3) for the organic material, having one or more openings (4) to receive organic material to be treated.

In a 2nd aspect according to the preceding aspect, the plant includes:
- a loading channel (6) having one or more outlet mouths (7), each configured to be connected with a respective one of said one or more openings (4) of the reactor (2),
- a loading conveyor (8) operating inside the loading channel (6) and configured to move the organic material along the same loading channel (6).

In a 3rd aspect according to the preceding aspect, the plant includes a closure device (9) carried by the loading channel (6) and operating in correspondence of at least at one of said one or more outlet mouths (7), said closure device (9) having a shutter (10) selectively movable between:
- a closed position in which it prevents the passage of organic material;
- an open position in which it allows the passage of organic material towards the reactor (2).

In a 3bis aspect a closure device to be used in a plant of treatment of organic material according to any one of the preceding aspects is provided.

In a 4th aspect according to the 3rd aspect or according to the 3bis aspect, the closure device (9) further comprises one or more separation elements (11) emerging from the shutter (10) towards the interior of a respective outlet mouth (7) of the loading channel (6), said one or more separation elements (11) being configured to interfere with organic material located at the outlet mouth (7) of the loading channel (6).

In a 5th aspect according to the preceding aspect, said one or more separation elements (11) are integrally movable with (i.e., move together with) the shutter (10) during the movement of the shutter (10) between the closed position and the open position.

In a 6th aspect according to any of the two preceding aspects, said one or more separation elements (11), during the movement of the shutter (10) from the closed position to the open position, are configured to remove a portion of organic material located at a respective outlet mouth (7) of the loading channel (6). In a 7th aspect according to any one of the three preceding aspects said one or more separation elements (11) are integral with the shutter (10).

In an 8th aspect according to any one of the four preceding aspects said one or more separation elements (11) are located below the loading conveyor (8).

In a 9th aspect according to any one of the five preceding aspects, said one or more separation elements (11), during the transition between the closed position and the open position of the shutter (10), remain distanced from the loading conveyor (8) and do not interfere with the loading conveyor (8).

In a 10th aspect according to any one of the six preceding aspects, said one or more separation elements (11) are located at an end region (12) of the shutter (10).

In an 11th aspect according to the preceding aspect, the end region (12) of the shutter (10) defines, separation elements (11) are located at an end region (12) of the shutter (10), said end region (12) defining, in the open position of the shutter (10), a portion of a perimeter edge of a respective one of said one or more outlet mouths (7).

In a 12th aspect according to any one of the eight preceding aspects, said one or more separation elements (11) include at least two separation elements spaced apart and aligned along a direction transverse to a movement direction (A) of the shutter (10) between said open position and said closed position.

In a 13th aspect according to any one of the nine preceding aspects, said one or more separation elements (11) include at least two separation elements aligned with each other along a direction transverse to a movement direction (A) of the shutter (10) between said open position and said closed position.

In a 14th aspect according to any one of the preceding aspects from 4th to 13th, said one or more separation elements (11) extend in height along development directions (S) that are parallel to each other and transverse to the shutter (10).

In a 15th aspect according to any one of the preceding aspects from 4th to 14th, said one or more separation elements (11) include at least one central element (16) positioned in a central area of the end region (12) of the shutter (10).

In a 16th aspect according to any one of the preceding aspects from 4th to 15th, said one or more separation elements (11) further include two or more peripheral elements (17) positioned on opposite sides of the shutter (10) relative to the central element (16).

In a 17th aspect according to the two preceding aspects, the central element (16) has height lower than the height of said two or more peripheral elements (17).

In an 18th aspect according to the preceding aspect, a ratio between the height of the central element (16) and the height of a respective one of said two or more peripheral elements (17) is comprised between 0.6 and 0.98, optionally comprised between 0.7 and 0.9.

In a 19th aspect according to any one of the preceding aspects from 4th to 18th said one or more separation elements (11) have an elongated body removably engaged with the shutter (10), for example by screws or bolts.

In a 20th aspect according to any one of the preceding aspects from 4th to 19th, the closure device (9) includes a transverse component (18) carried by said one or more separation elements (11) and configured to interfere with the organic material during the movement of the shutter (10) between the open position and closed position.

In a 21st aspect according to the preceding aspect, the transverse component (18) extends in proximity to the loading conveyor (6) along a development trajectory (T) transverse to said one or more separation elements (11).

In a 22nd aspect according to the preceding aspect, the development trajectory (T) of the transverse component (18) has a concavity facing the loading conveyor (8).

In a 23rd aspect according to any one of the two preceding aspects, the development trajectory (T) of the transverse component (18) includes two straight segments converging with each other.

In a 24th aspect according to any one of the four preceding aspects, the transverse component (18) is spaced from the shutter (10) and engaged at a top portion (19) of each of said one or more separation elements (11) opposite to the shutter (10).

In a 25th aspect when depending on any one of the preceding aspects from the 12th to 16th, the transverse component (18) connects transversely to each separation element (11).

In a 26th aspect according to any one of the six preceding aspects, the transverse component (18) is a filamentary body, optionally made of metallic material.

In a 27th aspect according to any one of the seven preceding aspects, the transverse component, in cooperation with said one or more separation elements, forms one or more passage channels (15) delimited at the top by the transverse component (18).

In a 28th aspect according to any one of the preceding 2nd to 3rd and 4th to 27th aspects, the loading channel (6) has a plurality of outlet mouths (7) longitudinally separated from each other relative to a rotation axis (C) of the loading conveyor (8).

In a 29th aspect according to the preceding aspect, the plant includes a plurality of closure devices (9), each of which operates on a respective outlet mouth (7) of said plurality of outlet mouths.

In a 30th aspect according to the 3rd aspect or according to any one of the preceding aspects from the 4th to the 29th, the plant includes a control unit (50) connected to each closure device (9) to regulate the movement of the shutter (10) between the closed position and the open position.

In a 31st aspect according to the preceding aspect, the control unit (50) is configured to command the movement of each closure device (9) periodically at regular intervals or following a command.

In a 32nd aspect according to the 3rd aspect or any one of the preceding aspects from the 4th to 31st, the closure device (9) includes an actuation mechanism (13) connected to the shutter (10) and configured to cause its movement between the closed position and the open position.

In a 33rd aspect according to the preceding aspect, the actuation mechanism (13) has an electric or pneumatic motor.

In a 34th aspect according to the preceding aspect in combination with the 30th or 31st aspect, the control unit (50) is configured to act on the actuation mechanism (13) of the closure device (9).

In a 35th aspect according to any one of the preceding aspects when depending on the 30th aspect, the control unit (50) is connected to the reactor (2) to regulate an opening and/or closing of said one or more openings (4) of the reactor (2).

In a 36th aspect according to the preceding aspect, the control unit (50) is configured to synchronize the movement of the shutter (10) from the closed position to the open position with the opening of at least one of said one or more openings (4) of the reactor (2).

In a 37th aspect according to any one of the two preceding aspects, the control unit (50) is configured to synchronize the movement of the shutter (10) from the open position to the closed position with the closing of at least one of said one or more openings (4) of the reactor (2).

In a 38th aspect according to any one of the preceding aspects excluding aspect 3bis, when depending on the 2nd aspect, is rotatable relative to the loading conveyor (8), optionally by means of one or more electric, hydraulic, or pneumatic motors.

In a 39th aspect according to any one of the preceding aspects when depending on the 30th aspect, the control unit (50) is connected to the reactor (2), optionally to said one or more electric, hydraulic, or pneumatic motors, and configured to regulate the movement of the reactor (2) so that said one or more openings (4) of the reactor are aligned with a respective outlet mouth (7) at least during the passage of the shutter (10) from the closed position to the open position and vice versa.

In a 40th aspect according to any one of the preceding aspects excluding aspect 3bis, the reactor (2) has a tubular, elongated outer enclosure (2a) configured as a cylindrical or prismatic drum.

In a 41st aspect a process for treating organic material using a plant according to any one of the preceding aspects from the 1st to the 39th is provided.

In a 42nd aspect according to the preceding aspect using the plant according to the 3rd and 4th aspects, the process includes:
- moving each shutter or the shutter (10) between:
   ∘ said closed position in which it prevents the passage of organic material through the respective outlet mouth,
   ∘ said open position in which it allows the passage of organic material towards the reactor (2);
   wherein during the movement of the shutter from the closed position to the open position, said one or more separation elements (11) interfere with and unblock organic material located at the outlet mouth (7) of the loading channel (6), facilitating its transfer towards the treatment chamber (3) of the reactor,
- thermally treating the organic material received in the treatment chamber (3) of the reactor (2).

In a 43rd aspect according to the preceding aspect, said one or more separation elements (11) move integrally with (i.e., move together with) the shutter (10) during the movement of the shutter (10) between the closed position and the open position.

In a 44th aspect according to any one of the two preceding aspects, said one or more separation elements (11) during the movement of the shutter (10) from the closed position to the open position remove a portion of organic material located at a respective outlet mouth (7) of the loading channel (6).

In a 45th aspect according to any one of the three preceding aspects, said one or more separation elements (11) during the transition between the closed position and the open position of the shutter (10) remain distanced from the loading conveyor (8) and do not interfere with the loading conveyor (8).

In a 46th aspect according to any one of the four preceding aspects using the plant according to the 20th aspect, the transverse component (18) extends in proximity to the conveyor, and, during the movement of the shutter (10) between the closed and open positions of the loading channel (6), separates a portion of organic material present at a respective outlet mouth (7) of the loading channel (6).

In a 47th aspect according to any one of the five preceding aspects using the plant according to the 28th aspect, during the movement of the shutter (10) between the closed and open positions of the loading channel (6), a portion of organic material present at a respective outlet mouth (7) of the loading channel (6) passes through said one or more passage channels (15).

In a 48th aspect according to any one of the six preceding aspects, during the step of thermally treating, the organic material, the reactor (2) is rotated relative to the loading conveyor (8).

In a 49th aspect according to any one of the seven preceding aspects, during the movement of the shutter from the closed to the open position, the reactor (2) is angularly positioned so that said one or more openings (4) of the reactor are aligned with a respective outlet mouth (7) to allow the reactor to be loaded with organic material coming from the loading channel (6).

In a 50th aspect according to any one of the preceding aspects from 1st to 39th, the plant includes:
- a gas exhaust duct (30) connected to the reactor (2) and configured to extract exhaust gases from the treatment chamber (3),
- a gas inlet duct (31) connected to the reactor (2) and configured to introduce feed gas into the reactor (2),
- a heat exchanger (32) active on the gas inlet duct and gas exhaust duct (30, 31) to transfer heat from the exhaust gases coming from the reactor (2) to the feed gases, such as atmospheric gases, cooling the exhaust gases and heating the feed gases before they enter the reactor (2).

In a 51st aspect according to the preceding aspect, the plant includes an extractor (33) active on the gas exhaust duct (30) and configured to extract exhaust gases from the reactor (2) and move them along the gas exhaust duct (30).

In a 52nd aspect according to the preceding aspect, the extractor (33) is active on either the gas exhaust duct (30) or the gas inlet duct (31).

In a 53rd aspect according to any one of the preceding three aspects, the plant includes a filter (34) active on the gas exhaust duct (30) and located at the outlet of the reactor (2) upstream of the extractor and the heat exchanger (32), said filter being configured to filter exhaust gases coming from the reactor (2) and directed towards the extractor (33) and the heat exchanger (32).

In a 54th aspect according to any one of the three preceding aspects, the extractor (33) is located upstream or downstream of the heat exchanger (32).

In a 55th aspect according to any one of the two preceding aspects, the filter (34) includes:
- a dirty air chamber (35) configured to receive exhaust gases coming from the reactor (2);
- a clean air chamber (36) configured to receive filtered gases to be moved towards the extractor (33) and the heat exchanger (32);
wherein the clean air chamber (36) is located above the dirty air chamber (35).

In a 56th aspect according to any one of the six preceding aspects, the gas exhaust duct (30) includes:
- an initial section (30a) connecting the filter (34) to the reactor (2), said initial section (30a) being radially engaged to the tubular body (34a) of the filter (34) at a gas inlet (41) of the tubular body (34a) facing the dirty air chamber (35),
- a terminal section (30b) connecting the filter (34) to the extractor (33) and the heat exchanger (32), said terminal section (30b) being radially engaged to the tubular body (34a) of the filter (34) at a gas outlet (42) of the tubular body (34a) facing the clean air chamber (36).

In a 57th aspect according to any one of the four preceding aspects, the filter (34) has a tubular body (34a), optionally cylindrical, developing transversely with respect to a movement trajectory of exhaust gases in the gas exhaust duct (30).

In a 58th aspect according to the preceding aspect when depending on the 55th aspect, the tubular body (34a) of the filter (34) delimits the dirty air chamber and said clean air chamber.

In a 59th aspect according to any one of the three preceding aspects, the initial section (30a) of the gas exhaust duct (30) has, close to the gas inlet (41) of the filter (34), a gas passage cross-section smaller than a gas passage cross-section of the dirty air chamber (35) to cause a deceleration of the gas entering the dirty air chamber.

In a 60th aspect according to the preceding aspect, the ratio between the gas passage cross-section of the initial section (30a) of the gas exhaust duct (30) close to the gas inlet (41) of the filter (34) and the gas passage cross-section of the dirty air chamber (35) is comprised between 0.2 and 0.8.

In a 61st aspect according to any one of the five preceding aspects, the plant includes a debris discharge duct (40) in communication with a lower area of the dirty air chamber (35) and configured to expel debris or impurities falling from the filter (34).

In a 62nd aspect according to the preceding aspect, the debris discharge duct (40) is radially engaged to the dirty air chamber (35) of the filter (34) on the opposite side to the initial section (30a) with respect to a vertical median plane of the filter (34).

In a 63rd aspect according to any one of the three preceding aspects, the debris discharge duct (40) has a curvilinear shape defining a hydraulic siphon.

In a 64th aspect according to any one of the three preceding aspects, the debris discharge duct (40) comprises:
- a main section (40a) having a "U" shape;
- a proximal section (40b) hydraulically interposed between the filter (34) and the main section (40a);
- a terminal section (40c) transversely engaged to the main section (40a) on the opposite side to the proximal section (40b),
wherein the proximal section (40a) is located above the terminal section (40c).

In a 65th aspect according to the preceding aspect, the proximal section (40b) of the debris discharge duct (40) is located below the gas inlet (41) of the dirty air chamber (35) to which the initial section (30a) of the exhaust duct (30) is engaged.

In a 66th aspect according to any one of the preceding aspects from 50th to 65th in combination with the 55th aspect, the filter (34) has a bottom wall (43) that delimits the dirty air chamber (35) at the bottom, wherein said bottom wall (43) is inclined with respect to a horizontal plane.

In a 67th aspect according to the preceding aspect in combination with any one of the preceding aspects from 61st to 65th, the bottom wall (43) has an upper portion (35a) located near the gas inlet (41) of the initial section (30a) of the gas exhaust duct (30) and a lower portion (35b) located near the debris discharge duct (40), optionally near the proximal section (40b) of the debris discharge duct (40).

In a 68th aspect according to any one of the preceding aspects from 50th to 67th in combination with the 55th aspect, the filter (34) includes a filtering membrane (37) that, in an operational condition, is interposed between the dirty air chamber (35) and the clean air chamber (36) so that the gas in the dirty air chamber can pass into the clean air chamber exclusively by passing through said filtering membrane.

In a 69th aspect according to the preceding aspect, the filtering membrane (37) can be moved between said operational condition and a non-operational condition where it is disengaged from the rest of the filter.

In a 70th aspect according to any one of the two preceding aspects, the plant includes a connecting body (38) that provides a mechanical connection, for example by screws or bolts, between the clean air chamber and the dirty air chamber, said filtering membrane (37) being removably engaged in a housing seat (39) inside the connecting body (38).

In a 71st aspect according to any one of the preceding three aspects, the filtering membrane (37) has a flat shape with a reticular structure, optionally made of metallic material, for example steel.

In a 72nd aspect according to any one of the preceding four aspects, the filtering membrane (37) extending over the entire gas passage cross-section between the dirty air chamber (35) and the clean air chamber (36).

In a 73rd aspect according to any one of the three preceding aspects, the connecting body (38) has an access slot to the housing seat (39) of the filtering membrane (37).

In a 74th aspect according to any one of the four preceding aspects, the filtering membrane (37) is slidably movable relative to the connecting body (38) for insertion or extraction from the access slot.

In a 75th aspect according to any one of the preceding 68th to 74th aspects, the plant includes a cleaning nozzle (44) located above the filtering membrane (37) and configured to dispense a cleaning fluid onto the same filtering membrane (38) to remove debris or impurities from it.

In a 76th aspect according to the preceding aspect in combination with the 55th aspect, the cleaning nozzle (44) is located in the clean air chamber (36) of the filter (34) and oriented transversely, for example orthogonally, to the upper surface of the filtering membrane in the operational position.

In a 77th aspect according to any one of the preceding two aspects, the plant includes a control unit (50) connected to the cleaning nozzle (44) and configured to command the dispensing of the cleaning fluid at regular intervals, for example periodically or in response to a command.

In a 78th aspect according to any one of the preceding aspects from the 50th to the 77th in combination with the 55th aspect, the plant includes:
- a differential pressure sensor (45) having a first and a second probe respectively in communication with the dirty air chamber (35) and the clean air chamber (36) of the filter (34), said differential pressure sensor (45) being configured to generate a signal representing a differential pressure between the dirty air chamber (35) and the clean air chamber (36); or
- a first and a second pressure sensor (45a, 45b) respectively in communication with the dirty air chamber (35) and the clean air chamber (36) of the filter (34), said first and second pressure sensors (45a, 45b) being configured to generate respectively a signal representing a pressure in the dirty air chamber (35) and a signal representing a pressure in the clean air chamber (36) of the filter (34).

In a 79th aspect according to the preceding aspect, the control unit (50) is connected to the differential pressure sensor (45) or to each of said first and second pressure sensors (45a, 45b) and configured to:
- determine a measured differential pressure value based on the signal from the differential pressure sensor (45) or the signals from said first and second pressure sensors (45a, 45b);
- command the cleaning nozzle (44) to dispense the cleaning fluid when the measured differential pressure value exceeds a threshold differential pressure value optionally between 5 mbar e 20 mbar, even more optionally between 10 mbar and 15 mbar.

In an 80th aspect a process for treating organic material using a plant according to any one of the preceding aspects from 50th to 79th is provided.

In an 81st aspect according to the preceding aspect, the process includes:
- introducing feed gas into the reactor (2) through the gas inlet duct (31);
- thermally treating the organic material received in the treatment chamber (3) of the reactor (2);
- extracting exhaust gases from the treatment chamber (3) through the gas exhaust duct (30);
- transferring heat from the exhaust gases coming from the reactor (2) to the feed gases, cooling the exhaust gases and heating the feed gases before they enter the reactor (2);
- filtering exhaust gases coming from the reactor (2) and directed towards the extractor (33) and the heat exchanger (32).

In an 82nd aspect according to any one of the two preceding aspects using a plant according to the 61st aspect, the process comprises expelling debris or impurities falling from the filter (34) through the debris discharge duct (40).

In an 83rd aspect according to any one of the three preceding aspects using a plant according to the 77th aspect, the process comprises dispensing cleaning fluid from the cleaning nozzle (44) at regular intervals, for example periodically or in response to a command.

In an 84th aspect according to any one of the four preceding aspects using a plant according to the 78th aspect, the process includes:
- determining a measured differential pressure value based on the signal from the differential pressure sensor (45) or the signals from said first and second pressure sensors (45a, 45b);
- commanding the cleaning nozzle (44) to dispense the cleaning fluid when the measured differential pressure value exceeds a threshold differential pressure value, optionally comprised between 5 mbar e 20 mbar, even more optionally between 10 mbar and 15 mbar.

In an 85th aspect according to any one of the preceding aspects from 1st to 39th or any one of the preceding aspects from 50th to 79th, the plant includes a support frame (56).

In an 86th aspect according to the preceding aspect the reactor (2) is mounted on the support frame (56) in such a way that it can perform a rotation about a rotational axis (R) of the reactor and a translation relative to the support frame (56).

In an 87th aspect according to any one of the two preceding aspects, the plant includes an angular position sensor (59), said sensor (59) comprising:
- a reference component (59a),
- a rotating component (59b) angularly integral with the reactor (2), wherein the reference component (59a) is configured to cooperate with the rotating component (59b) allowing the sensor (59) to provide at least one output signal representative of a relative angular position of the reactor (2) with respect to the support frame (56).

In an 88th aspect according to any one of the three preceding aspects, the plant further includes one or more suspension systems (57) connecting the support frame (56) to the reference component (59a) of the sensor (59) and configured to allow the reference component (59a) at least one translational movement relative to the support frame (56).

In an 89th aspect according to the preceding aspect, said one or more suspension systems (57) are configured so that the translational movement of the reference component (59a) of the sensor (59) relative to the support frame (56) comprises the following components:
- an axial component along a direction parallel to or coinciding with the rotational axis (R) of the reactor (2),
- a radial component along a direction transverse to the rotational axis (R).

In a 90th aspect according to the preceding aspect said one or more suspension systems (57) are configured so that:
- said axial component is less than 20 mm,
- said radial component is less than 10 mm, even more optionally less than 5 mm.

In a 91st aspect according to any one of the three preceding aspects said one more suspension systems (57) are configured to limit a rotational movement of the reference component (59a) of the sensor (59) relative to the support frame (56).

In a 92nd aspect according to any one of the four preceding aspects said one more suspension systems (57) are configured to limit a rotational movement of the reference component (59a) of the sensor (59) relative to the support frame (56) to an angle less than 5°, optionally less than 0.5°.

In a 93rd aspect according to any one of the preceding aspects from 1st to 39th or any one of the preceding aspects from 50th to 79th or any one of the preceding aspects from 85th to 92nd, the reactor (2) has a tubular body extending parallel to the rotational axis (R) of the reactor (2).

In a 94th aspect according to any one of the preceding 85th to 93rd aspects the reactor (2) is movable by translation relative to the support frame (56), optionally axially, parallel to or along said rotational axis (R). In a 95th aspect according to any one of the preceding aspects from 85th to 94th, the reactor (2) is movable by translation relative to the support frame (56) radially, transverse to the rotational axis (R).

In a 96th aspect according to any one of the preceding 85th to 95th aspects when depending on the 88th aspect one or more suspension systems (57) are configured to allow the translation of the reference component (59a) of the sensor (59) in synchronization with the translational movement of the reactor (2) while simultaneously limiting or preventing the rotation of the same reference component (59a) relative to the reactor (2).

In a 97th aspect according to any one of the preceding aspects from 85th to 96th when depending on the 88th aspect the reactor (2) is movable by translation relative to the support frame (56) axially by no more than 20 mm and radially by no more than 10 mm, optionally no more than 5 mm.

In a 98th aspect according to any one of the preceding 85th to 97th aspects the reactor (2), optionally the tubular body, includes a transmission rod (64) fixed to a terminal wall (65) of the reactor (2).

In a 99th aspect according to the preceding aspect, the transmission rod (64) emerges from a central area of the terminal wall (65) of the reactor (2) parallel to the rotational axis (R) of the reactor (2).

In a 100th aspect according to any one of the two preceding aspects when depending on the 87th aspect, the rotating component (59b) of the sensor (59) is carried by the transmission rod (64) and is integrally movable with (i.e., is configured to move together with) the reactor (2).

In a 101st aspect according to any one of the three preceding aspects when depending on the 88th aspect, the plant includes a rotating support (68), optionally a bearing, operatively interposed between said one or more suspension systems (57) and the transmission rod (64).

In a 102nd aspect according to the preceding aspect the rotating support (68) includes:
- an inner ring (68a) rigidly fixed to the transmission rod (64),
- an outer ring (68b) rotatable relative to the inner ring (68a), optionally by means of rolling elements interposed between the inner ring and outer ring.

In a 103rd aspect according to the preceding aspect, the outer ring (68b) of the rotating support (68) is connected to the support frame (56) via said one or more suspension systems (57).

In a 104th aspect according to any one of the two preceding aspects, the reference component (59a) of the sensor (59) is rigidly coupled to the outer ring (68b) of the rotating support (68).

In a 105th aspect according to any one of the four preceding aspects, the rotating support (68) is fixed axially and angularly to the transmission rod (64) to prevent relative movement between the rotating support (68) and the transmission rod (64).

In a 106th aspect according to any one of the preceding aspects from 85th to 105th when depending on the 87th aspect the sensor (59) comprises at least one detector of a parameter, optionally an optical, electrical, or electromagnetic parameter, related to a relative angular position of the rotating component (59b) with respect to the reference component (59a).

In a 107th aspect according to any one of the preceding 85th to 106th aspects when depending on the 87th aspect the sensor is one selected from: encoder, resolver, rotary potentiometer, Hall effect angular position sensor, and rotary optical sensor.

In a 108th aspect according to any one of the preceding 85th to 107th aspects when depending on the 88th aspect each of said one or more suspension systems (57) includes an elastic component (73) arranged with a respective axis of development directed transversely to the rotational axis (R) to allow the translational movement of the reference component (59a) of the sensor (59) relative to the support frame (56).

In a 109th aspect according to the preceding aspect, the elastic component (73) is a helical spring.

In a 110th aspect according to any one of the preceding 85th to 111th aspects comprising a plurality of suspension systems (57) engaging the support frame (56) to the reference component (59a) of the sensor (59).

In a 111th aspect according to the preceding aspect said suspension systems (57) are angularly offset from each other, optionally by an angle comprised between 80° and 160°, more optionally by an angle of 120°.

In a 112th aspect according to any one of the two preceding aspects, the suspension systems (57) are identical to each other and symmetrically arranged with respect to said rotational axis (R).

In a 113th aspect according to any one of the five preceding aspects, each elastic component (73) is pretensioned, optionally each helical spring is pretensioned, to limit or prevent the rotation of the same reference component (59a) relative to the reactor (2).

In a 114th aspect according to any one of the preceding aspects from 85th to 113th, the plant includes a rotating coupling device (61) to allow the transmission of electrical or pneumatic power between the reactor (2) and one or more electrical or pneumatic supply lines (69) carried by the support frame (56).

In a 115th aspect according to the preceding aspect, the plant includes one or more auxiliary suspension systems (63) connecting the support frame (56) to the rotating coupling device (61).

In a 116th aspect according to any one of the two preceding aspects, the rotating coupling device (61) includes:
- an internal element (61a) carried by the reactor (2) and integrally movable with (i.e., is configured to move together with) it, said internal element being electrically or pneumatically connected to said one or more supply lines,
- an external element (61b) connected to the support frame (56) via said one or more auxiliary suspension systems (63) and coupled to the internal element to allow the transmission of electrical or pneumatic power from the external element to the internal element.

In a 117th aspect according to any one of the two preceding aspects said one or more auxiliary suspension systems (63) allow a translational movement of the rotating coupling device (61) relative to the support frame (56) in the following directions:
- axially, parallel to or along said rotational axis (R), and
- radially, transverse to the rotational axis (R).

In a 118th aspect according to any one of the three preceding aspects said one more auxiliary suspension systems (63) are configured to limit a rotational movement of the rotating coupling device (61) relative to the support frame (56).

In a 119th aspect according to any one of the four preceding aspects said one or more auxiliary suspension systems (63) are configured to accommodate the translation of the rotating coupling device (61) in synchronization with the translational movement of the reactor (2) while simultaneously limiting the rotation of the external element (61b) of the rotating coupling device (61) relative to the reactor (2).

In a 120th aspect according to any one of the five preceding aspects each of said one or more auxiliary suspension systems (63) includes an elastic component (74) arranged with a respective axis of development directed transversely to the rotational axis (R) to allow the translational movement of the rotating coupling device (61) relative to the support frame (56).

In a 121st aspect according to the preceding aspect, the elastic component (74) of each of said one or more auxiliary suspension systems (63) is a helical spring.

In a 122nd aspect according to any one of the seven preceding aspects, the plant includes a plurality of auxiliary suspension systems (63) engaging the support frame (56) to the rotating coupling device (61).

In a 123rd aspect according to the preceding aspect said auxiliary suspension systems (63) are angularly offset from each other, optionally by an angle between 140° and 220°, even more optionally by an angle of 180°.

In a 124th aspect according to any one of the two preceding aspects, the auxiliary suspension systems (63) are identical to each other and symmetrically arranged with respect to said rotational axis (R).

In a 125th aspect according to any one of the preceding aspects from 114th to 124th the rotating coupling device (61) is selected from: a contact ring, a rotary transformer, an optical ring, or a fluidic rotary joint.

In a 126th aspect according to any one of the preceding 85th to 125th aspects, the plant includes a motorization (71), optionally of the electrical or hydraulic type, carried by or integral with the support frame (56) and acting on an external surface of the reactor (2) to rotate the reactor itself relative to the support frame (56), wherein said motorization (71) has a plurality of motorized rollers (72), each optionally driven by a respective electric or hydraulic motor, positioned peripherally with respect to the external surface of the reactor (2).

In a 128th aspect according to any one of the preceding aspects from 85th to 127th when depending on the 87th aspect the sensor (59) is configured to generate said output signal representative of a relative angular position of the reactor (2) with respect to the support frame (56).

In a 129th aspect according to the preceding aspect when depending on the 126th or 127th aspect the plant comprises a control unit (50) connected to the sensor (59) and configured to:
- receive the output signal,
- determine a measured rotation value of the reactor (2) with respect to the support frame (56) based on the output signal,
- control the motorization (71), optionally each motorized roller (72) of the motorization (71), based on said measured rotation value.

In a 130th aspect according to any one of the preceding aspects from the 1st to the 39th or any one of the preceding aspects from the 50th to the 79th or any one of the preceding aspects from the 85th to the 129th, the plant includes:
- a plurality of sensors positioned in the treatment chamber (3) corresponding to a plurality of zones (3a), said plurality of sensors including at least one sensor for each zone (3a) configured to measure at least one control parameter of the organic material in the respective zone (3a), said at least one control parameter being related to the moisture content of the organic material in the respective zone (3a);
- a control unit (50) operatively connected at least to the reactor (2) and the plurality of sensors to perform the process for treating organic material according to any one of the preceding claims.

In a 131st aspect according to the preceding aspect said plurality of sensors includes a plurality of temperature sensors (60-67), each temperature sensor (60-67) being configured to measure a temperature of the organic material present in the respective zone (3a) and to send a signal representing the temperature of the organic material to the control unit (50).

In a 132nd aspect according to any one of the two preceding aspects said plurality of temperature sensors (60-67) includes a plurality of thermocouples.

In a 133rd aspect according to any one of the three preceding aspects, the plurality of temperature sensors (60-67) includes at least two temperature sensors for each of the zones (3a).

In a 134th aspect according to the preceding aspect said at least two temperature sensors being spaced apart to measure the temperature of the organic material in at least two different positions of the respective zone (3a).

In a 135th aspect according to any one of the two preceding aspects said at least two temperature sensors being positioned in a plane orthogonal to a rotation axis (R) of the reactor (2).

In a 136th aspect according to any one of the preceding aspects from 130th to 135th said plurality of sensors includes at least one weight sensor for each of the zones (3a), said at least one weight sensor being configured to measure a weight of the organic material present in the respective zone (3a) and to send a signal representing the weight of the organic material to the control unit (50).

In a 137th aspect according to any one of the preceding aspects from 130th to 135th the reactor (2) includes a plurality of openings (4) configured to allow the loading of organic material to be treated into the treatment chamber (3), the control unit (50) being operatively connected to the plurality of openings (4) to regulate their opening and/or closing, optionally during a step of loading organic material to be treated and/or during a step of loading new organic material into the treatment chamber (3).

In a 138th aspect according to the preceding aspect, the control unit (50) is also configured to regulate the amount of organic material loaded through each of the plurality of openings (4) to regulate a distribution of the organic material in said plurality of zones (3a).

In a 139th aspect according to any one of the preceding 130th to 139th aspects, the plant includes a loading channel (6) having a plurality of outlet mouths (7), each outlet mouth (7) being configured to communicate with a respective opening (4) of the reactor (2) for loading organic material into the treatment chamber (3).

In a 140th aspect according to the preceding claim, the control unit (50) being operatively connected to the loading channel (6) to regulate an opening and/or closing of the plurality of outlet mouths (7), optionally during a step of loading organic material to be treated and/or during a step of loading new organic material into the treatment chamber (3).

In a 141st aspect according to any one of the four preceding aspects, the plurality of openings (4) of the reactor (2) is also configured to allow the discharge of treated organic material from the treatment chamber (3), the control unit (50) being operatively connected to the plurality of openings (4) to regulate their opening and/or closing, optionally during a step of discharging at least part of the organic material.

In a 142nd aspect according to any one of the preceding aspects from 137th to 141st, the reactor (2) is movable at least between a loading position (P1) wherein said plurality of openings (4) are aligned with said plurality of outlet mouths (7) for loading organic material into the treatment chamber (3) and a discharge position (P2) in which said plurality of openings (4) allow the discharge of treated organic material from the treatment chamber (3).

In a 143rd aspect according to the preceding aspect, the control unit (50) is connected to the reactor (2) to control the movement of the reactor (2) to the loading position (P1), optionally during a step of loading organic material to be treated and/or during a step of loading new organic material into the treatment chamber (3).

In a 144th aspect according to any one of the two preceding aspects, the control unit (50) is connected to the reactor (2) to determine the movement of the reactor (2) to the discharge position (P2), optionally during a step of discharging at least some of the organic material.

In a 145th aspect according to any one of the preceding aspects from 130th to 144th when depending on the 50th aspect, the plant includes at least one feed gas temperature sensor (68) operatively active on the gas inlet duct (31) and configured to measure a temperature of the feed gas.

In a 146th aspect according to the preceding aspect, feed gas temperature sensor (68) being operatively connected to the control unit (50) to send a signal representing the temperature of the feed gas.

In a 147th aspect according to any one of the preceding aspects from 130th to 146th when depending on the 50th aspect, the plant includes an exhaust gas temperature sensor (69) operatively active on the gas exhaust duct (30) and configured to measure a temperature of the exhaust gas.

In a 148th aspect according to the preceding aspect, the exhaust gas temperature sensor (69) being operatively connected to the control unit (50) to send a signal representing the temperature of the exhaust gas.

In a 149th aspect according to the 146th aspect and the 148th aspect, the control unit (50) is configured to compare the signal representing the temperature of the feed gas and the signal representing the temperature of the exhaust gas to determine a degree of completion of step b) of drying the organic material.

In a 150th aspect according to any one of the preceding aspects from 130th to 149th when depending on the 50th aspect, the reactor (2) includes a permeable support (20) housed in the treatment chamber (3) and interposed between the gas inlet duct (31) and the gas exhaust duct (30).

In a 151st aspect according to the preceding aspect, the permeable support (20) is configured to support the organic material in the treatment chamber (3) and to allow the passage of gas from the gas inlet duct (31) to the gas exhaust duct (30) through said organic material at least during step b) of drying the organic material present in the treatment chamber (3).

In a 152nd aspect a process for treating organic material using a plant according to any one of the preceding aspects from 130th to 151st is provided.

In a 153rd aspect according to the preceding aspect, the process includes the steps of:
a) loading organic material to be treated in a treatment chamber (3) of a reactor (2),
b) drying the organic material present in the treatment chamber (3) to obtain treated organic material,
c) discharging at least part of the treated organic material present in the treatment chamber (3),
d) determining, for each of a plurality of zones (3a) inside the treatment chamber (3), at least one control parameter, optionally related to the moisture of the organic material, present in each of said zones (3a),
e) loading new organic material into the treatment chamber (3), distributing the new material differentially among two or more of said zones (3a), based on the values of the at least one control parameter.

In a 154th aspect according to the preceding aspect step c) of discharging at least part of the treated organic material includes leaving a bed (B) of treated organic material inside the reactor.

In a 155th aspect according to any one of the two preceding aspects step d) of determining the value of the control parameter for each zone (3a) takes place during step b) of drying the organic material and/or following step c) to determine the value of at least one control parameter for each of said zones (3a) where treated organic material is present.

In a 156th aspect according to any one of the three preceding aspects, step e) of loading new organic material follows step d) of determining the value of the control parameter for each of the zones (3a).

In a 157th aspect according to any one of the four preceding aspects, steps (b), (c), (d), (e) are repeated cyclically.

In a 158th aspect according to any one of the five preceding aspects step d) of determining at least one control parameter for each of the zones (3a) involves determining at least one temperature value of the organic material present in each of the zones (3a).

In a 159th aspect according to the preceding aspect said temperature value allowing an estimate of the moisture content of the organic material present in each of the zones (3a).

In a 160th aspect according to any one of the two preceding aspects step (d) of determining the value of at least one control parameter for each of the zones (3a) involves determining a plurality of temperature values of the organic material present in each of the zones (3a).

In a 161st aspect according to the preceding aspect said plurality of temperature values being jointly considered, optionally averaged, to estimate the moisture content of the organic material present in each of the zones (3a).

In a 162nd aspect according to any one of the four preceding aspects, step e) of loading new organic material into the treatment chamber (3) involves distributing the new material differentially among two or more of said zones (3a) based on at least one temperature value determined in each of the zones (3a).

In a 163rd aspect according to any one of the five preceding aspects step e) of loading new organic material into the treatment chamber (3) involves the amount of new organic material loaded in each of the zones (3a) being proportional, optionally directly proportional, to at least one temperature value of the organic material determined in that zone.

In a 164th aspect according to any one of the preceding aspects from 153rd to 163rd the step d) of determining at least one control parameter for each of the zones (3a) involves determining a weight value of the organic material present in each of the zones (3a).

In a 165th aspect according to any one of the preceding aspects from 153rd to 164th step a) of loading organic material to be treated into the treatment chamber (3) involves uniformly distributing the organic material to be treated among the plurality of zones (3a).

In a 166th aspect according to any one of the preceding aspects from 153rd to 165th step a) of loading organic material to be treated into the treatment chamber (3) and/or step e) of loading new organic material into the treatment chamber (3) involve loading the organic material through a plurality of openings (4) of the reactor (2), the amount of organic material loaded through each opening of said plurality of openings (4) determining the amount of organic material present in each zone (3a).

In a 167th aspect according to any one of the preceding aspects from 153rd to 166th, step a) of loading organic material to be treated into the treatment chamber (3) and/or step e) of loading new organic material into the treatment chamber (3) involve aligning the plurality of openings (4) of the reactor (2) with a plurality of outlet mouths (7) of a loading channel (6) configured to feed organic material to be treated into the treatment chamber (3) of the reactor (2).

In a 168th aspect according to any one of the preceding aspects from 153rd to 167th step e) of loading new organic material into the treatment chamber (3) involves differentially loading the new organic material through the plurality of openings (4) so that the new organic material is distributed differentially among two or more of said zones (3a).

In a 169th aspect according to any one of the preceding aspects from 153rd to 168th step c) of discharging at least part of the organic material involves discharging at least part of the organic material from the treatment chamber (3) through at least one opening of the plurality of openings (4).

In a 170th aspect according to any one of the preceding aspects from 153rd to 169th between step a) of loading organic material to be treated into the treatment chamber (3) and step c) of discharging at least part of the organic material, a movement of the reactor (2) is provided to change the position of the plurality of openings (4) from a loading position (P1) suitable for loading organic material into the treatment chamber (3) to a discharge position (P2) suitable for discharging at least part of the organic material present in the treatment chamber (3).

In a 171st aspect according to the preceding aspect between step c) of discharging at least part of the organic material and step e) of loading new organic material into the treatment chamber (3), a movement of the reactor (2) is provided to change the position of the plurality of openings (4) from said discharge position (P2) to said loading position (P1).

In a 172nd aspect according to any one of the two preceding aspects, reactor (2) movement between the discharge position (P2) and loading position (P1) involves rotation of the reactor (2) about a rotational axis (R).

In a 173rd aspect according to any one of the preceding aspects from 153rd to 172nd, step b) of drying the organic material involves rotating the reactor (2) around the rotation axis (R).

In a 174th aspect according to any one of the two preceding aspects the rotation of the reactor (2) being optionally performed discontinuously during step b) of drying the organic material.

In a 175th aspect according to any one of the preceding aspects from 153rd to 174th, step b) of drying the organic material involves recirculating gas in said treatment chamber (3) to remove moisture from said organic material.

In a 176th aspect according to any one of the preceding aspects from 153rd to 175th step b) of drying the organic material involves:
- introducing feed gas into the treatment chamber (3) through a gas inlet duct (31),
- treating the organic material in the treatment chamber (3) using said feed gas, and
- removing exhaust gas from the treatment chamber (3) through a gas exhaust duct (30).

In a 177th aspect according to any one of the preceding aspects from 153rd to 176th the step b) of drying the organic material involves measuring a temperature of the feed gas in the gas inlet duct (31) and measuring a temperature of the exhaust gas in the gas exhaust duct (30), a comparison between the feed gas temperature and the exhaust gas temperature determining a degree of completion of step b) of drying the organic material.

### BRIEF DESCRIPTION OF THE DRAWINGS

Some exemplary embodiments and aspects of the invention will be described below with reference to the accompanying drawings, provided for illustrative purposes only and therefore not limiting, in which:
- Figures 1 and 2 are perspective and schematic views of a plant for the treatment of organic material in accordance with aspects of the present invention;
- Figure 3 is a schematic view of a loading channel of the plant for the treatment of organic material shown in Figures 1 and 2;
- Figure 4 is a detailed cutaway view of the loading channel of Figure 3;
- Figure 5 is a cross-sectional view of the loading channel of Figure 3;
- Figure 6 is a longitudinal sectional view of the loading channel of Figure 3;
- Figure 7 is a perspective view of a closure device operating on the loading channel of Figure 3 in a closed condition;
- Figure 8 is a perspective view of a closure device operating on the loading channel of Figure 3 in an open condition;
- Figures 9-13 are detailed perspective views of suspension systems operating on a reactor belonging to the plant for the treatment of organic material shown in Figures 1 and 2;
- Figure 14 is a longitudinal sectional view of the suspension systems of Figure 14;
- Figures 15 and 16 are perspective views of a gas exhaust duct of a reactor belonging to the plant for the treatment of organic material shown in Figures 1 and 2;
- Figure 17 is a cross-sectional view of a filter operating on the gas exhaust duct shown in Figures 15 and 16;
- Figure 18 is a perspective cutaway view of a filter operating on the gas exhaust duct shown in Figures 15 and 16;
- Figure 19 is a perspective view of a filter operating on the gas exhaust duct shown in Figures 15 and 16;
- Figure 20 is a side sectional view of a connecting body of the filter of Figure 19;
- Figure 21 is a perspective view of the connecting body of the filter of Figure 19;
- Figure 22 is a schematic side sectional view of a reactor of the plant shown in Figures 1 and 2;
- Figures 23-27 are schematic views of a reactor of the plant shown in Figures 1 and 2 during the treatment of organic material;
- Figure 28 is a schematic view of a reactor of the plant shown in Figures 1 and 2 in a phase of discharging organic material;
- Figure 29 is a schematic view of a reactor of the plant shown in Figures 1 and 2 in a phase of loading new organic material;
- Figure 30 is a block diagram related to a process for treating organic material in accordance with aspects of the present invention.

### DEFINITIONS AND CONVENTIONS

Note that in the present detailed description, corresponding parts illustrated in the various figures are indicated by the same reference numbers. The figures may depict the subject of the invention through non-scaled representations; therefore, the parts and components shown in the figures related to the subject of the invention may pertain solely to schematic representations.

### CONTROL UNIT

The plant described and claimed herein may include/utilize at least one control unit responsible for controlling operating conditions put in place by the same plant and/or controlling the process steps described and/or claimed herein.

The control unit can be a single unit or consist of a plurality of distinct control units depending on design choices and operational needs.

By control unit is meant a component of electronic type, which may include at least one of: a digital processor (CPU), an analog type circuit, or a combination of one or more digital processors with one or more analog type circuits. The control unit can be *"configured"* or "*programmed*" to perform certain steps: this can be accomplished in practice by any means that allows the control unit to be configured or programmed. For example, in the case of a control unit comprising one or more CPUs and one or more memories, one or more programs may be stored in appropriate memory banks attached to the CPU(s); the program(s) contain instructions that, when executed by the CPU(s), program or configure the control unit to perform the operations described in relation to the control unit. Alternatively, if the control unit is/includes analog type circuitry, then the circuitry of the control unit may be designed to include circuitry configured, in use, to process electrical signals in such a way as to perform the steps related to the control unit. Parts of the process described herein may be accomplished by means of a data processing unit, or control unit, that is technically substitutable for one or more electronic processors designed to execute a portion of a software program or firmware loaded onto a memory medium. Such software program may be written in any programming language of a known type. The electronic processors, if two or more in number, may be interconnected by means of a data connection such that their computational powers are in any way shared; the same electronic processors may thus be installed in even geographically diverse locations, realizing through the aforementioned data connection a distributed computing environment. The data processing unit, or control unit, can be a *general purpose* processor configured to perform one or more parts of the process identified in the present invention through the software program or firmware, or be an ASIC or dedicated processor or FPGA, specifically programmed to perform at least part of the operations of the process described herein. The memory medium may be non-transitory and may be internal or external to the processor, or control unit, or data processing unit, and may, specifically, be a memory geographically located remote from the processor. The memory medium may also be physically divided into multiple portions, or in *cloud* form, and the software program or firmware may be stored on geographically divided portions of memory.

### DETAILED DESCRIPTION

### Plant for treating organic material

With reference to the accompanying figures, a plant for treating organic material, e.g., sludge from civil or industrial sewage, aimed at reducing the moisture content of the material by taking advantage of the heat generated by the natural bacterial activity present in the organic material itself, has been collectively referred to as numerical reference 1. In this context, the organic material to be treated may have a solid component of settleable suspended matter, for example, accounting for 25% of the total mass, while the remainder is composed of effluents, primarily consisting of water.

The organic substances in the material provide a source of nutrients for the bacteria present, which, during a drying process, are stimulated by the introduction of oxygen-rich gases, called feed gases, which facilitate the conversion of nutrients into energy, thus generating heat that causes an increase in temperature inside the plant to facilitate the evaporation of moisture in the organic material. This thermal increase can raise the temperature of the material from 10-15°C up to 70-80°C, allowing some of the moisture contained in the organic material to evaporate, thus reducing both the weight and volume of the material. During the drying process, moisture-laden exhaust gases at relatively high temperatures are discharged from the plant. Before being released, the exhaust gases pass through a heat exchanger, where they transfer some of their waste heat to the incoming feed gases, optimizing the energy efficiency of the drying process. The solid residues obtained from drying organic material can be subsequently heated and/or refined to produce additional materials, such as activated carbon.

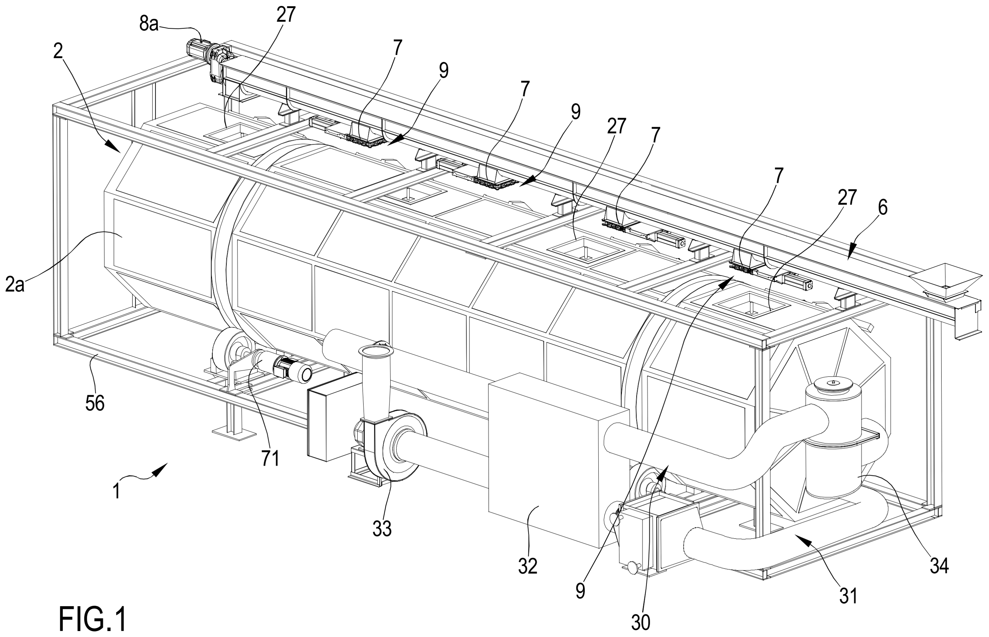

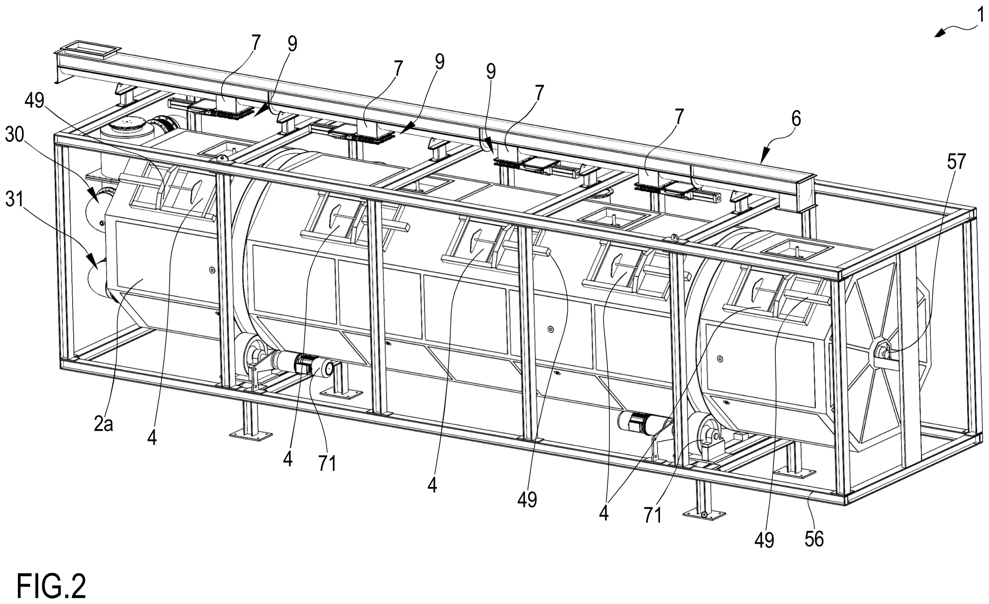

Before delving into the details of the individual components of the plant, a general overview of the main elements of the plant will be provided below. With reference to Figures 1 and 2, the plant features a reactor 2, within which the drying of the organic material takes place. The material to be treated is introduced into reactor 2 through a loading channel 6 positioned above the reactor itself.

The plant may further include channels for transporting gases, useful to initiate and maintain the drying process. In one example, the plant may include a gas inlet channel 31 dedicated to the introduction of oxygen-rich feed gases. In parallel, a gas exhaust duct 30 allows the discharge of exhaust gases from the reactor 2. As previously mentioned, the plant may include a heat exchanger 32, which allows the exhaust gases to transfer heat to the incoming feed gases, thereby increasing the energy efficiency of the process.

Moving now to a detailed description of the main components of the plant, we begin with the reactor 2, which has a treatment chamber 3 to receive and process the organic material. In the illustrated example, reactor 2 features an outer casing 2a with an elongated tubular shape, configured as a cylindrical or prismatic drum supported by a support frame 56. Along the outer casing 2a, there are a plurality of openings 4, visible for example in Figure 2, that allow the entry of organic material. The openings 4 are arranged along the entire length of the casing, evenly spaced and adjacent, to facilitate uniform loading of the material.

The reactor 2 is also equipped with a series of closure flaps 49, positioned at each opening 4, which allow for the selective opening or closing of the openings 4 based on the operating conditions of the reactor. In one example, one or more, optionally all, of the closure flaps 49 can be set to an open position to allow the passage of organic material to be treated, while during the treatment, the same closure flaps 49 can be closed to prevent unwanted spillage of material. As will be explained in more detail later, the openings 4 on the outer casing 2a of reactor 2 can also be used for the expulsion of organic material at the end of the treatment.

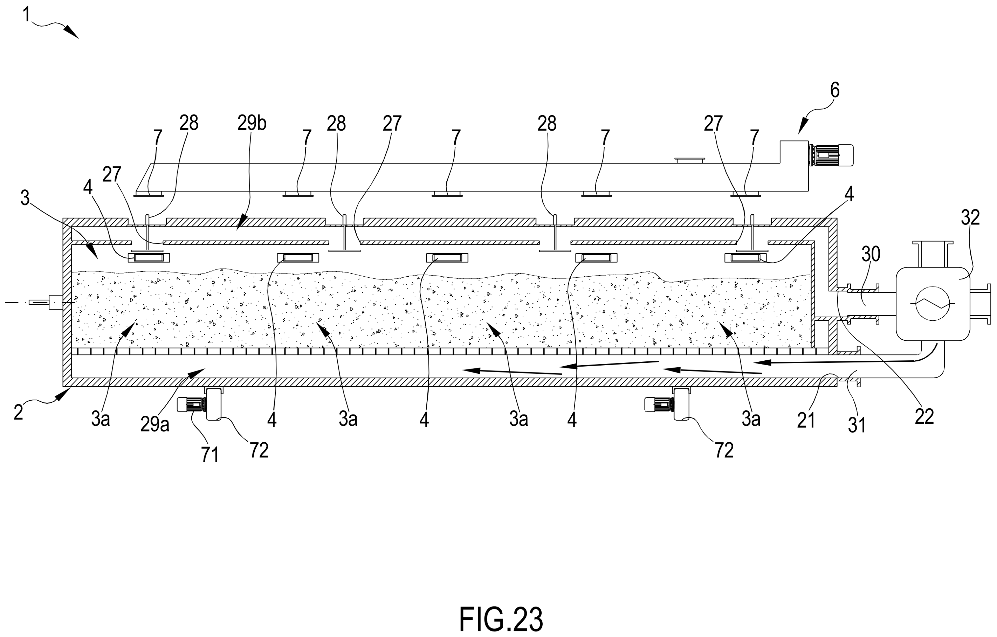

The outer casing 2a of reactor 2 may also feature, at an end wall longitudinally delimiting the reactor 2, both a gas inlet hole 21 that can be coupled to the gas inlet channel 31 for the intake of feed gases, and a gas outlet hole 22 that can be coupled to the gas exhaust duct 30 to allow the discharge of the exhaust gases. For further reference, figures 23-27 show the gas inlet hole 21 and the gas outlet hole 22. Regarding the internal components and with reference to Figures 23-27, the reactor 2 may have an inner casing 25 surrounding treatment chamber 3 where organic material is processed. In one example, the inner casing 25 has a tubular conformation and is located radially inside the outer casing 2a of the reactor 2, to which it is rigidly attached.

The inner casing 25 may be delimited at the bottom by a permeable support 20 supporting the organic material to be processed, while laterally and superiorly, the inner casing 25 may be delimited by a side wall 26. Radially interposed between the permeable support 20 and an inner surface of the outer casing 2a, the reactor 2 may have a lower cavity 29a to channel feed gases along an entire length of the reactor 2 and through the permeable support 20 to reach the organic material.

Similarly, the reactor 2 may have an upper cavity 29b interposed between an upper surface of inner casing 25 and the outer casing 2a of reactor 2. The upper cavity 29b allows exhaust gases to be routed outside the reactor 2 via the outlet hole 22. The inner casing 25 may also have gas outlet openings 27 facing the upper cavity 29b to allow the exhaust gases to pass from the treatment chamber 3 to the upper cavity 29b and then be discharged. The gas outlet openings 27 may be selectively closed by means of a closure switch 28, for example during a step of loading organic material into the treatment chamber 3, and subsequently opened during treatment.

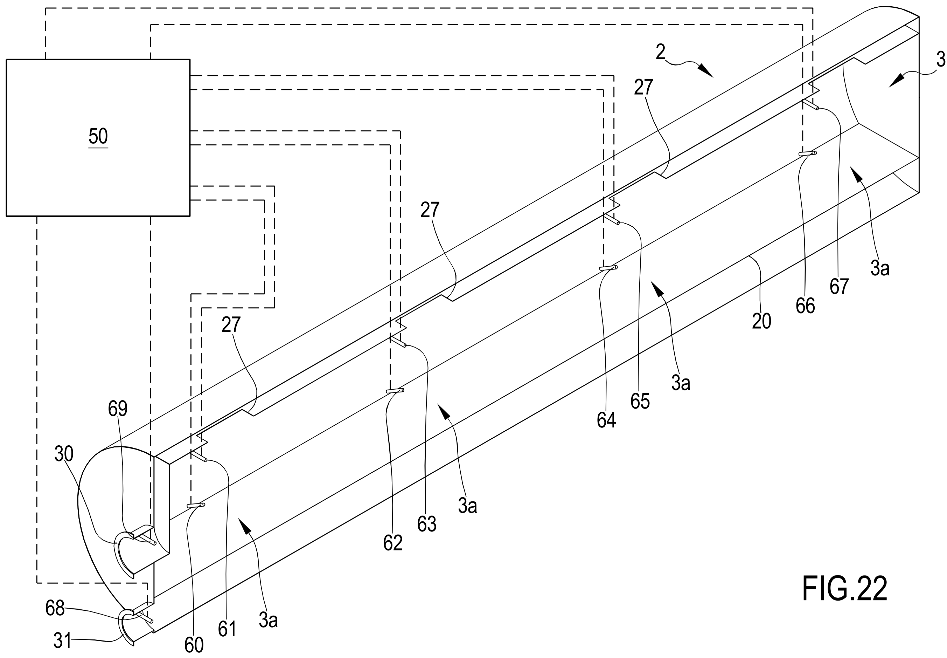

The drying process can be monitored by a plurality of sensors located in the treatment chamber 3, configured to detect a control parameter representative of the material and in particular its water content, such as temperature, moisture or a weight value of a portion of the treated material. One or more sensors may be located in respective zones 3a of the treatment chamber 3, each of which corresponds to an area vertically aligned with an opening 4. In an example shown in Figure 22, the plant may have temperature sensors 60-67, such as thermocouples, to detect a temperature of the organic material in specific zones 3a of the treatment chamber 3. The temperature sensors 60-67 may be vertically spaced to measure the temperature of the organic material at different depths. In other words, by distributing the plurality of temperature sensors in two rows vertically spaced apart, it is possible to determine a stratification of organic material, which may exhibit different temperatures depending on the more or less deep accumulation of the material. For each row, the sensors can be axially spaced along one development directions of reactor 2. By axially distributing the sensors of each row throughout the entire development of the reactor 2, it is possible to detect temperature values of organic material in respective zones 3a of treatment chamber 3.

A control unit 50 may be connected to the temperature sensors 60-67 to receive signals representative of a temperature of the organic material in a specific zone 3a of the treatment chamber. Based on the temperature signals received from the temperature sensors 60-67, the control unit 50 can be configured to determine temperature values of the organic material that can be used to execute a loading strategy of the organic material in a differentiated manner between two or more zones. Further details regarding the strategy adopted by the plant to load material in a differentiated manner based on the temperature values detected by the temperature sensors 60-67 will be described in relation to the treatment process detailed in the following.

Based on the temperature values determined by the temperature sensors 60-67, the control unit 50 can also be configured to estimate the residual moisture of the organic material, which can then be used to execute the loading of the organic material. In this scenario, a drying curve may be used by the control unit 50 to determine residual moisture values of the organic material from the temperature values obtained from temperature sensors 60-67. Such a drying curve represents the relationship between the temperature of the material and its moisture content over time. In one example, the drying curve may be calibrated by a user according to the specific material to be processed, allowing customized drying processes based on the material.

As previously mentioned, the plant may also include a plurality of weight sensors, each located in a respective zone 3a of treatment chamber 3, to measure a weight of organic material in that zone 3a of treatment chamber 3.

The control unit 50 may be connected to each weight sensor to receive a signal representing the weight of the organic material in a specific zone 3a of the treatment chamber. Upon receiving the weight signal from the weight sensor, the control unit 50 may be configured to load the organic material independently for each zone 3a, based on the weight detected by a respective sensor. Alternatively or complementary to the presence of temperature sensors 60-67, the plant may also include humidity sensors, each located in a respective zone 3a of the treatment chamber 3, to measure the residual moisture of the organic material in that zone 3a of the treatment chamber 3.

The control unit 50 can be connected to each humidity sensor to receive a signal representative of a residual moisture of organic material in a specific zone 3a of the treatment chamber. Upon receiving the humidity signal from the humidity sensor, the control unit 50 can be configured to load the organic material independently for each zone 3a, based on the residual moisture detected by a respective sensor.

The reactor 2 can also rotate about a rotational axis R and with respect to the support frame 56 by means of a motorization 71, which can be either electric or hydraulic. The motorization 71 may be mounted on the support frame 56 and act on the outer surface of the reactor 2 by a series of motorized rollers 72, arranged around the outer circumference of the reactor and driven by electric or hydraulic motors 24. Note that the outer casing 2a of the reactor 2 can be made by welding successive tubular sections, giving the outer casing 2a a tubular shape with an elliptical cross-section. Therefore, the reactor 2, during rotation around the rotation axis R, can follow an elliptical or eccentric trajectory, differing from a perfectly circular ideal rotation. The specific elliptical cross-section shape of the reactor 2 causes the reactor to translate both along an axial component parallel to the rotation axis R and along a radial component, transverse to the rotation axis R. Consequently, the reactor can move translationally relative to the support frame 56, not just rotationally. The translational movement of the reactor along the axial and radial components can be undesirable when using angular position sensors of the reactor that have a rotating component, integral with the rotation of the reactor's outer casing 2a, and a reference component fixed to the support frame 56. In such a scenario, the translation of the reactor relative to the support frame can cause misalignment between the sensor components, leading to incorrect readings of the reactor's rotation.

There is thus a need to create a system that decouples the reference component from the support frame 56, allowing it to move in synchrony with the movement of the reactor 2 relative to the support frame 56, and to keep the rotating component of the sensor always aligned with the reference component, enabling a reliable measurement of the reactor's angular position.

Before proceeding with the detailed description of the system used to decouple the reference component from the support frame 56, the angular position sensor will be introduced, first detailing its structure and then its coupling with the reactor 2.

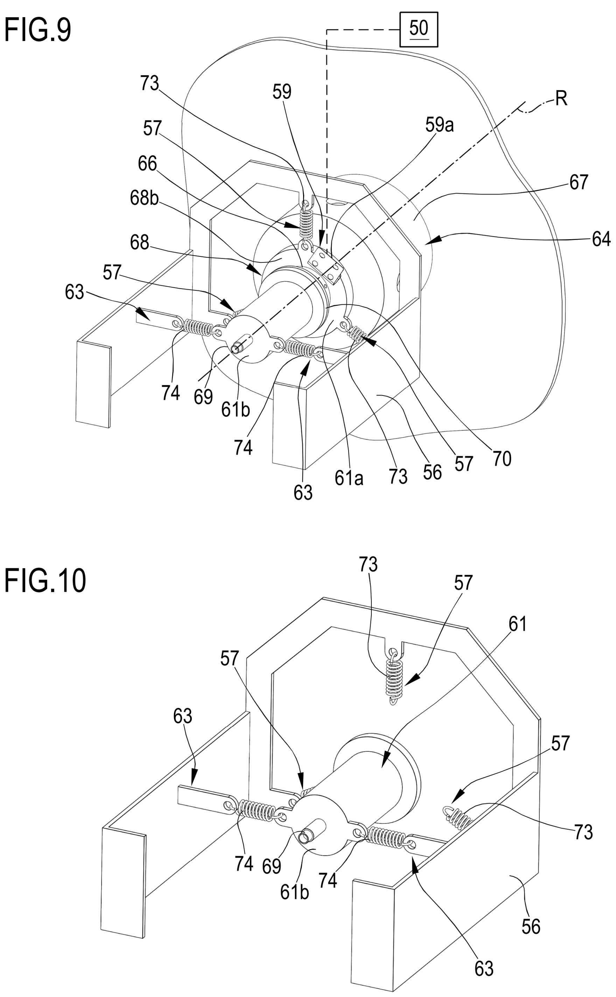

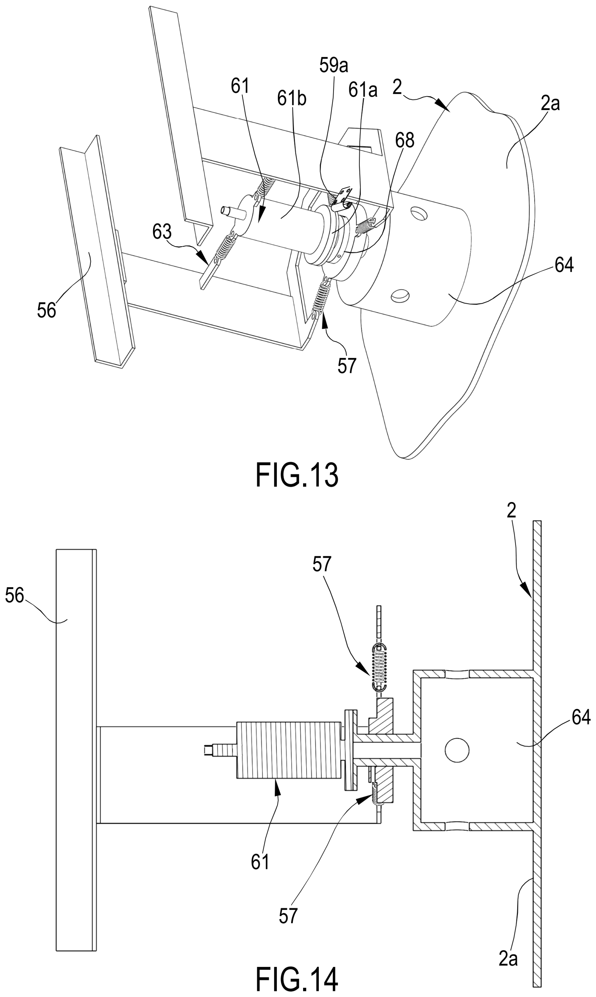

As shown generally in Figure 2 and in detail in Figures 9-14, the plant may include an angular position sensor 59, presenting a rotating component 59b angularly integral with the reactor 2 and a reference component 59a configured to cooperate with the rotating component 59b to generate at least one output signal representative of an angular position of the reactor 2 relative to the support frame 56. The sensor 59 may include a detector of a parameter, optionally an optical, electrical, or electromagnetic parameter, correlated with the relative angular position of the rotating component 59b relative to the reference component 59a. In one example, the angular position sensor 59 is one selected from: encoder, resolver, rotary potentiometer, Hall effect angular position sensor, and rotary optical sensor.

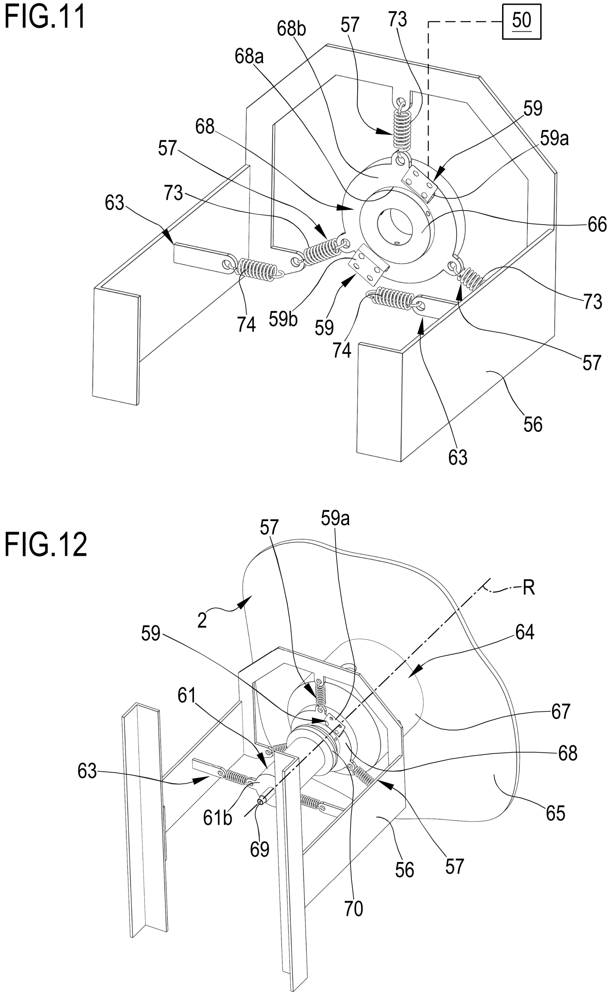

As shown, for example, in figure 11, the rotating component 59b of the angular position sensor 59 is coupled to a terminal wall 65 of the reactor 2, e.g., opposite to the gas inlet hole 21 and the gas outlet hole 22. In particular, the rotating component 59b of the angular position sensor 59 may be coupled to a transmission rod 64 rigidly attached to a central area of the terminal wall 65 of the reactor 2. The coupling between the rotating component 59b of the sensor 59 and the reactor may be achieved through a rotating support 68 comprising an inner ring 68a rigidly attached to the transmission rod 64, as well as an outer ring 68b movable by rotation relative to the inner ring 68a, for example, thanks to rolling elements positioned between the inner ring 68a and the outer ring 68b. Referring again to figure 11, the rotating support 68 is fixed, for example through the inner ring 68a, to transmission rod 64 to prevent relative movement between the rotating support 68 itself and the transmission rod 64. The coupling between the inner ring 68a of the rotating support 68 and the transmission rod may be achieved by means of screws or bolts inserted into holes drilled in the transmission rod 64. The rotating component 59b of the angular position sensor 59 is fixed to the inner ring 59a, thus moving in unison with the reactor 2. Conversely, the outer ring 68b is coupled to the suspension systems 57, which will be described later, designed to partially decouple (as detailed later) the reference component 59a of the angular position sensor 59 from the support frame 56.

As mentioned, the plant may also include one or more suspension systems 57 that connect the support frame 56 to the reference component 59a of the sensor 59 to allow the latter to move translationally relative to the support frame 56. In other words, the suspension systems 57 enable the reference component 59a of the angular position sensor 59 to follow the movement of the reactor 2 both along an axial component, parallel to or coinciding with the rotation axis R of the reactor 2, and along a radial component, transverse to the rotation axis R.

The suspension systems 57 are designed to accommodate the translation of the reference component 59a of the sensor 59 in synchrony with the translational movement of the reactor 2 while simultaneously limiting or preventing the rotation of the same reference component 59a relative to the reactor 2 with respect to the support frame 56. In one example, the suspension systems 57 may be configured to limit the rotational movement of the reference component 59a of the sensor 59 relative to the support frame 56 to an angle less than 5°, optionally less than 0.5°.

Each suspension system 57 may include an elastic component 73, optionally a helical spring, pretensioned to limit or prevent rotation of the same reference component 59a of the angular position sensor 59 relative to the reactor 2.

In the specific embodiment shown in the accompanying figures, the plant may comprise a plurality of suspension systems 57, for example three or more, angularly offset from each other. Note that at least three suspension systems are provided, angularly equidistant from each other, to prevent twisting of the reference component 59a of the angular position sensor 59 following a rotation of the reactor 2. In a specific example visible in figures 9-12, the plant has three suspension systems 57 angularly offset from each other by an angle of 80° to 160°, optionally 120°. In such a configuration, suspension systems 57 may be identical and symmetrically arranged relative to a vertical plane.

The plant 1, in addition to providing the suspension systems 57 described above to decouple support frame 56 and angular position sensor 59, may also provide additional suspension systems to decouple other plant components from the support frame 56. As shown, for example, in figures 9-12, a component of the system that can be decoupled from the support frame 56 is a rotating coupling device 61 dedicated to transmitting electrical and/or pneumatic supply between the reactor 2 and one or more supply lines 69, which are electrical and/or pneumatic, brought to the support frame 56. In one example, the rotating coupling device 61 allows for the continuous transmission of electrical and/or pneumatic signals from a stationary part to a rotating part. To achieve this, the rotating coupling device 61 may comprise an external element 61b connected to the electrical and/or pneumatic supply lines 69 carried by the support frame 56, as well as an internal element 61a, rigidly carried by the reactor 2 and electrically and/or pneumatically connected to the external element 61b of the rotating coupling device 61, for example, through sliding contacts. In one example, the rotating coupling device 61 may be one selected from: a contact ring, a rotating transformer, an optical ring, a fluidic rotary joint.

To accommodate the translational movement of the rotating coupling device 61 with respect to the support frame 56, both axially, along a direction parallel to or coinciding with the rotation axis R, and radially, along a direction transverse to the rotation axis R, the plant 1 may include one or more auxiliary suspension systems 63 that connect the support frame 56 to the rotary coupling device 61.

Similar to the suspension systems 57 connected to the angular position sensor 59, auxiliary suspension systems 63 are also configured to limit the rotational movement of the rotating coupling device relative to the support frame 56 while simultaneously allowing the translation of the same rotating coupling device 61 in synchrony with the translation movement of reactor 2.

Each auxiliary suspension system 63 may include an elastic component 74, optionally a helical spring, pre-tensioned to limit the translation of the coupling device 61 relative to the reactor 2. In the specific embodiment shown in figures 9-12, the plant may include a plurality of auxiliary suspension systems 63, for example two or more, angularly offset to each other. Note that at least two suspension systems are provided, angularly equidistant from each other, as this is the minimum number of suspension systems needed to accommodate the translation of the rotary coupling device 61 relative to the reactor 2. In one example, the system has two auxiliary suspension systems 63, angularly offset from each other by an angle between 140° and 220°, optionally 180°. In this configuration, the auxiliary suspension systems 63 can be identical and symmetrically arranged with respect to the rotation axis R of the reactor 2.

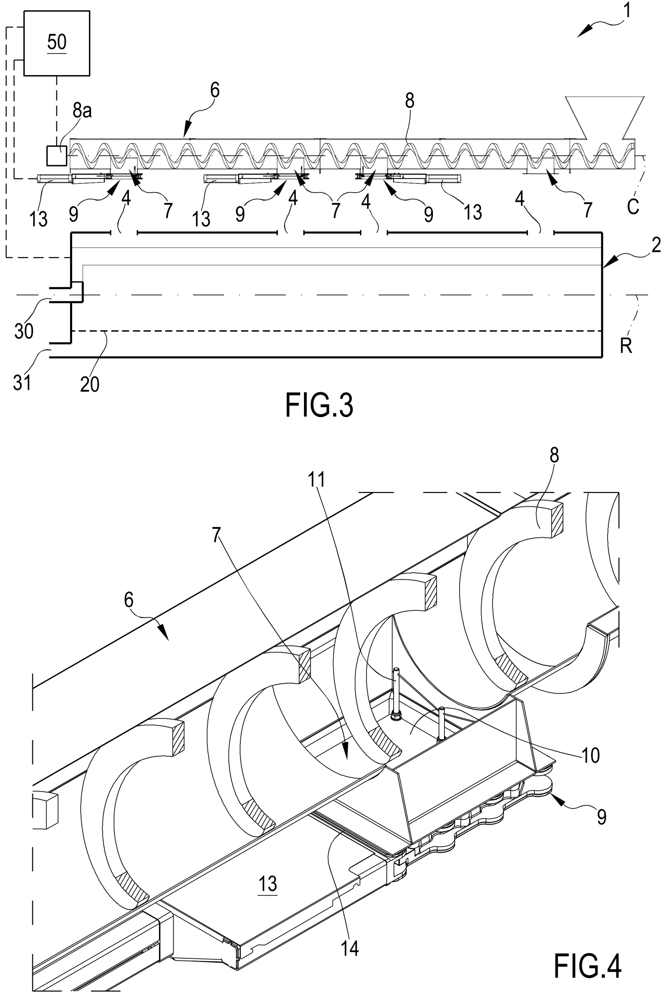

Having defined the structure of the reactor 2 and its associated components, the description will now proceed with the remaining structural components of the plant 1, dedicated to loading organic material into the reactor 1 and introducing and discharging gas from the reactor. Starting with the description of the components dedicated to loading material into reactor 2, the system may include a loading channel 6 with one or more outlet mouths 7 axially spaced from each other, each aligned with a respective opening 4 of the reactor 2. As schematically illustrated in figures 1-5, the loading channel 6 runs parallel to the reactor 2. The system may also include a loading conveyor 8, which operates inside the loading channel 6, to axially move the organic material along the same loading channel, allowing the organic material to be positioned at each outlet mouth 7, enabling its subsequent discharge into the reactor 2. In one example, the loading conveyor 8 is a screw or auger conveyor driven by a motor 8a, optionally electric, hydraulic, or pneumatic. However, the possibility of using other types of conveyors, such as a belt conveyor, is not excluded.

At each outlet mouth 7 of loading channel 6, the system includes a closure device 9 equipped with a shutter 10 selectively movable between a closed position and an open position, respectively preventing and allowing the passage of organic material to the reactor 2. In one example, the shutter 10 of the closure device 9 may be configured to the closed position during the movement of the loading conveyor 8 to ensure uniform distribution of the organic material along the loading channel 6. In this scenario, accumulations of material may form at one or more outlet mouths 7, compacted by additional organic material moved by loading conveyor 8. When the shutter 10 of the closing device 9 is moved to the open position, the compacted organic material at the outlet opening 7 may block the passage of further material through that outlet opening 7, thus preventing the proper transfer into reactor 2. To avoid requiring manual intervention by an operator to remove the compacted material, the system may be equipped with one or more separating elements 11, which protrude from the shutter 10 inside each outlet opening 7 of the loading channel 6. These elements interfere with the blocked organic material, facilitating its release and allowing the proper flow of material into reactor 2.

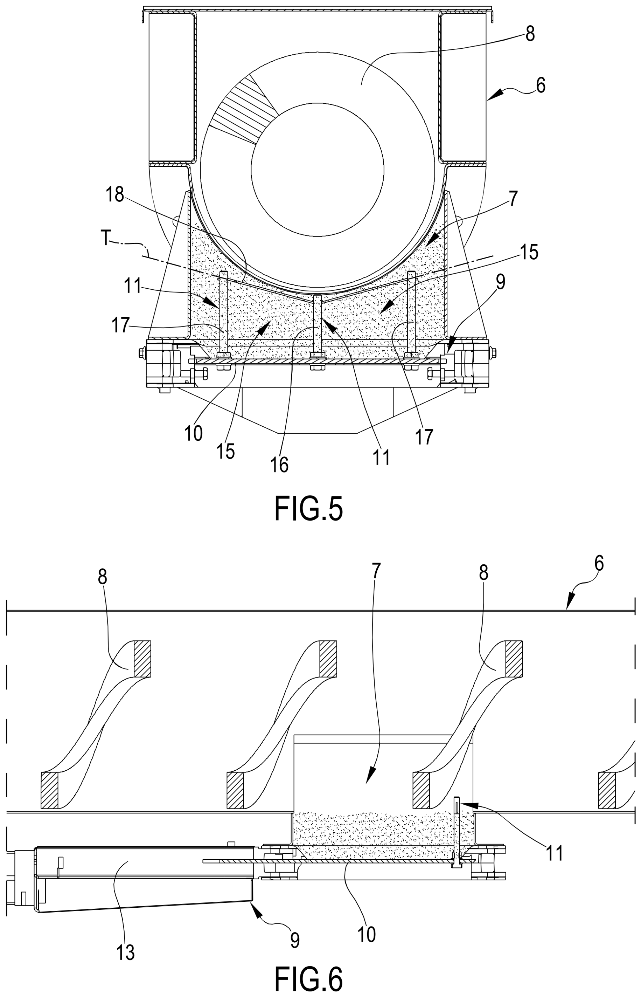

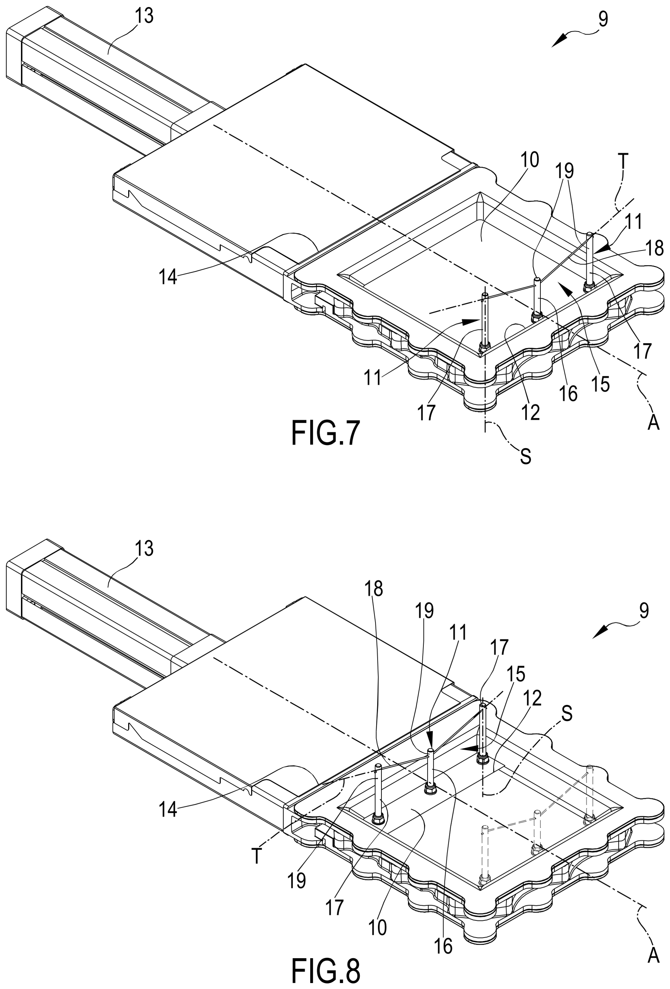

In one example, the separation elements 11 are elongated pins that move integrally with (i.e., move together with) the shutter 10 of the closing device 9, such that, during its movement from the closed position to the open position, part of the organic material located in a respective outlet opening 7 is simultaneously removed. As shown, for example, in figures 5 and 6, the separation elements 11 can be spaced apart and positioned below the loading conveyor 8 so that, during the movement of the shutter 10 between the open and closed positions, these separation elements 11 do not interfere with the loading conveyor 8, thus preventing breakage or malfunction at the loading channel 6. The separation elements 11 are arranged at the end 12 of the shutter 10, allowing them not only to fully follow the movement of the shutter during its travel from the closed position to the open position, as illustrated in figures 7 and 8, but also to maximize the stroke of the shutter itself, facilitating the passage of organic material through the outlet mouth 7. By placing the separation elements 11 in this region, the contact area with the compacted material in outlet mouth 7 is optimized, improving the effectiveness of the material's removal.

In one example, the separation elements 11 comprise two or more peripheral elements 17 spaced from each other and extending in height along directions parallel to each other and transverse, optionally orthogonal, to a sliding plane of the shutter 10. As illustrated in figure 5, the peripheral elements 17 are located symmetrically with respect to an ideal mid-plane that longitudinally divides shutter 10. The separation elements 11 can further include a central element 16 positioned between the peripheral elements 17. In one example, the central element 16 is positioned in a central area of the end region 12 of the shutter 10, aligned with the ideal mid-plane of the shutter 10. Similar to peripheral elements 17, the central element 16 may also extend parallel to a sliding plane of shutter 10, however, it reaches a lower height than a height reached by peripheral elements 17 to avoid contact with the loading conveyor 8. Specifically, a ratio between the height of the central element 16 and the height of each of said two or more peripheral elements 17 is comprised between 0.6 and 0.98, optionally between 0.7 and 0.9.

The closure device 9 may also comprise one or more transverse components 18 carried by one or more of separation elements 11 at an outlet mouth 7 of the reactor 2. As shown, for example, in detail in figures 7 and 8, the transverse component 18 can be a filamentary body, such as one made of metal, carried by one or more, optionally all, of the separating elements 11, and configured to interfere with the organic material during the movement of the shutter 10 between the open and closed positions. In one example, the transverse body 18 is spaced from the shutter 10 and engaged at a top portion 19 of said separation elements 11, transversely connecting each separation element 11.

The transverse body 18 may further extend near the loading conveyor 6, following a development trajectory T transverse to the separation elements 22 and has a concavity facing the loading conveyor 8. In one example, the development trajectory T of the transverse component 18 may include two converging straight sections, defining a concavity facing the loading conveyor 8. It should also be noted that the transverse component, in cooperation with one or more of the separating elements, forms passage channels 5, which are bounded at the top by the transverse component 18.

In an example not shown in the accompanying figures, the separation elements 11 may differ from what is described, including, for example, a bulkhead emerging from the shutter 10 and with an upper profile that is curved or V-shaped with a concavity facing towards the interior of the loading channel 6. In this scenario, each separation element 11 may have discharge openings for the material in communication with the openings 4 of the reactor 2.

Referring again to figures 7 and 8, the closure device 9 may also include an actuation mechanism 13 equipped with an electric or pneumatic motor to enable its movement between the open and closed positions. The plant may also include a control unit 50 connected to each closure device 9, particularly to a respective actuation mechanism 13, to control its movement between the closed position and open position. The control unit 50 may be further connected either with the motorization 71 dedicated to the rotation of the reactor 2 relative to the support frame 56, as well as to the closure flaps 49 to selectively open and close the openings 4 of the reactor 2. In one example, control unit 50 may be configured to synchronize the control of actuation mechanism 13 in the open position with the actuation of the motorization 71 and the closure flaps 49, so that the same openings 4 of the reactor 2, following the movement of the shutter 10 to the open position, are aligned with the respective outlet mouths 7 where the shutters operate to receive the material to be processed.

The control unit 50 may be further connected to the motor 8a of the loading conveyor 8, for example, to adjust its movement speed or synchronize its operation with the closure flaps 49 operating on the openings 4 of the reactor 2.

As mentioned earlier, after loading organic material into the treatment chamber 3, feed gases can be introduced into reactor 2 to initiate the drying process of the material. For this purpose, the plant may include a gas inlet duct 31 connected to reactor 2, particularly to the gas inlet hole on the end wall of the reactor itself, to introduce feed gases, such as ambient air, into the treatment chamber 3.

After passing through the material to be treated, exhaust gases rich in moist air and vapors generated by the drying process can be discharged from the reactor through a gas exhaust duct 30 to be dispersed into the environment. It should be noted that exhaust gases exhibit relatively high temperatures, such as between 70°C and 80°C when discharged into the environment. To increase the energy efficiency of the system, a heat exchange between feed gases at room temperature and exhaust gases can be provided. In particular, the exhaust gases, by transferring heat to the feed gases, cause an increase in their temperature, which accelerates the chemical reactions performed by the bacteria naturally present in the organic material. To achieve this, the plant may include a heat exchanger 32, active on the gas inlet and exhaust ducts 30, 31, and configured to transfer heat from the exhaust gases coming from the reactor 2 to the feed gases, thereby cooling the exhaust gases and heating the feed gases before they enter the treatment chamber 3.

The plant may also include one or more extractors or fans 33 active on one or both of the gas exhaust duct 30 and gas inlet duct 31 to generate feed gas and exhaust gas flows. In one example shown in figure 1, the plant is illustrated in a configuration having a single extractor 33 positioned on gas exhaust duct 30, downstream of heat exchanger 32. In this representation, the extractor 33 generates a vacuum within the treatment chamber 3 such that it draws exhaust gases to be moved along the gas exhaust duct 30 and at the same time, by virtue of the vacuum generated in the treatment chamber 3, moves the feed gases along the gas inlet duct 31.

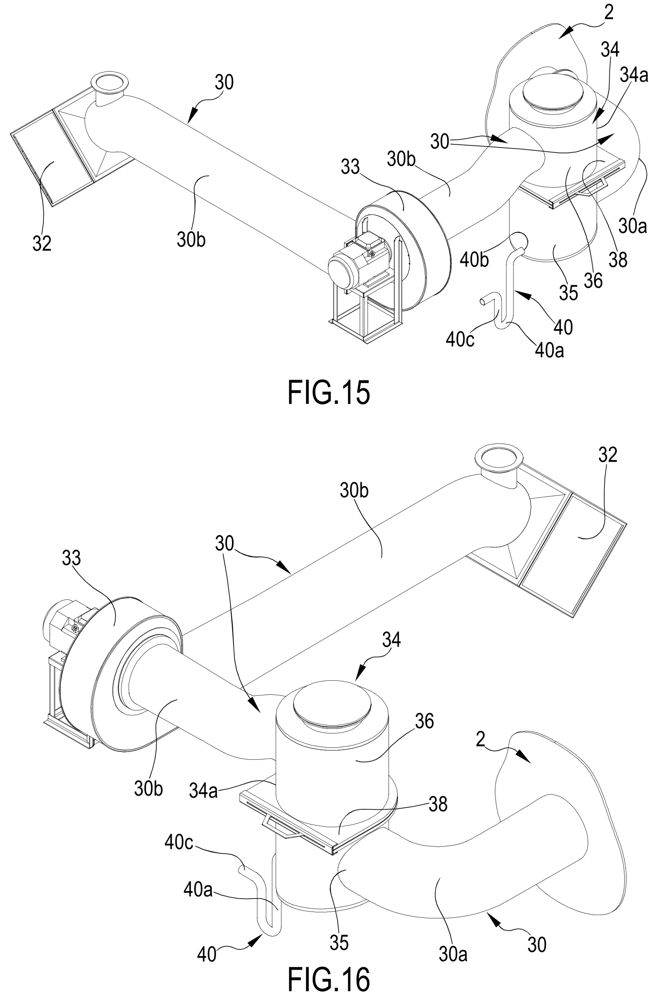

In a further example shown in figures 15 and 16, the plant may have a first fan, identified by numerical reference 33, operating on the gas exhaust duct 30 upstream of the heat exchanger 32 to take exhaust gases externally to the treatment chamber 3. In the latter configuration, there may be an additional fan (not shown in the accompanying figures), operating on the gas inlet duct 31 to take feed gases from the environment and convey them to the treatment chamber 3 of the reactor 2. Depending on the plant configuration considered, the extractor 33 may be located upstream or downstream of the heat exchanger 32.

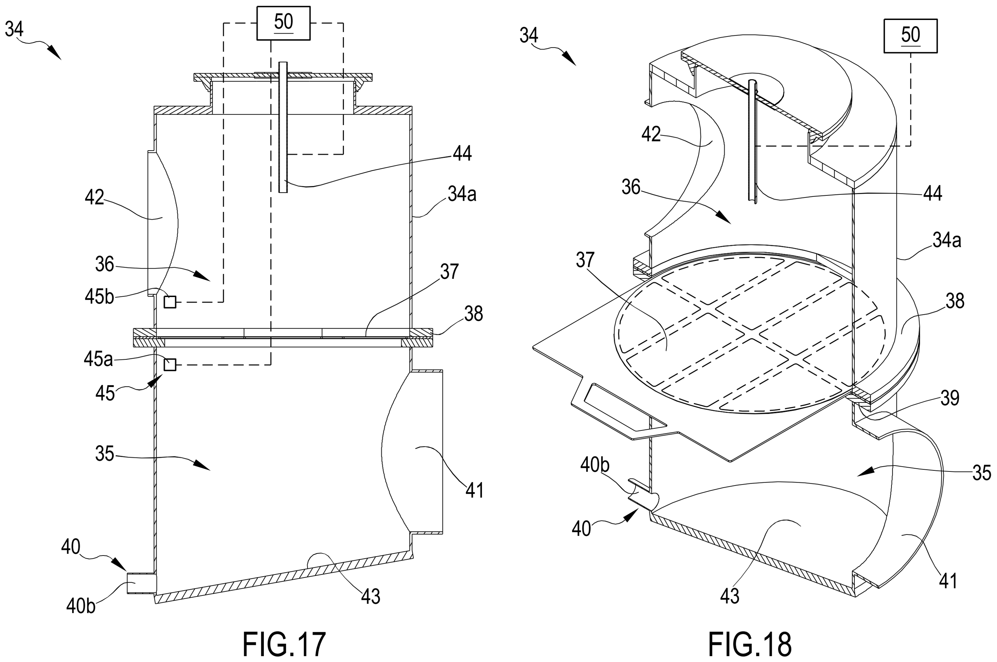

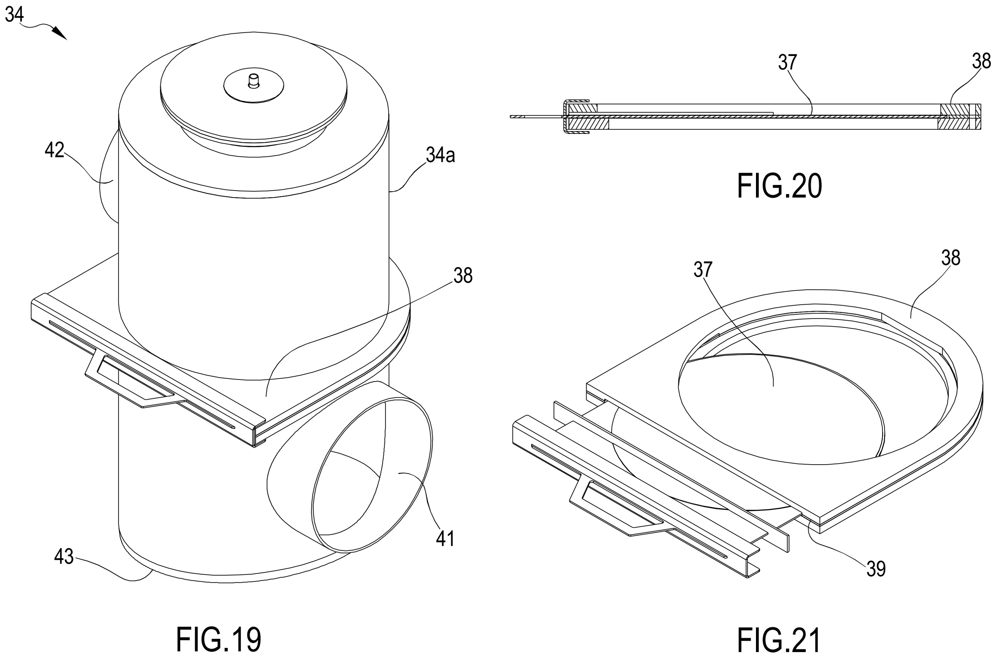

The gas exhaust duct 30 may be further equipped with filter systems to remove particulate matter and pollutants from the exhaust gases taken from the treatment chamber 3 before being dispersed into the environment. In one example, the plant may include a filter 34 operating on the gas exhaust duct 30, located at the outlet of the reactor 2 and upstream of the heat exchanger 32, to filter exhaust gases leaving the treatment chamber 3. Referring to figures 15-21, the filter 34 may have a tubular body 34a with a cylindrical shape, defining a dirty air chamber 35 suitable for receiving exhaust gases from the reactor, which is located below to a clean air chamber 36 suitable for receiving filtered gases to be moved towards the extractor and the heat exchanger 32. In one example, the tubular body 34a of filter 34 may be made from two separate bodies, defining the dirty air chamber 35 and the clean air chamber 36 respectively (see, for example, figures 17-19), which are coupled to each other by a connecting body 38, the latter shown in figures 20 and 21 and later detailed.

With reference to figures 15 and 16, the tubular body 34a of the filter 34 may develop transversely with respect to a movement trajectory of the exhaust gases from the gas exhaust duct 30. Note that such a configuration of the tubular body 34a of the filter 34 is not merely a design choice, but proves advantageous in facilitating the gravitational settling of dust or debris towards a bottom wall 43 of the dirty air chamber 35, thereby limiting their passage towards the clean air chamber 36.

Further examining the connection between filter 34 and the gas exhaust duct 30, it is noted, for example, by referring to figure 16, how the exhaust duct itself has an initial section 30a that connects the filter 34 to the reactor 2, engaging radially with the tubular body 34a of the filter 34 at gas inlet 41 of the tubular body 34a. The gas exhaust duct 30 may also have a terminal section 30b connecting the filter 34 to the extractor 33 and the heat exchanger 32. In one example, the terminal section 30b of the gas exhaust duct 30 is radially engaged to the tubular body 34a of the filter 34 at a gas exhaust outlet 42 of the tubular body 34a, facing the clean air chamber 36. The radial coupling of the initial section 30a and the terminal section 30b of the gas exhaust duct 30 with the filter 34 may also offer advantages related to the gravitational settling of dust and debris present in the exhaust gases drawn from the treatment chamber 3. Specifically, the radial coupling of the initial section 30a and the terminal section 30b of the gas exhaust duct 30 with filter 34, compared with an axial coupling on filter 34, facilitates the settling of particles or debris on the bottom wall 43 of the tubular body 34a of filter 34, thereby preventing their passage towards the clean air chamber 36. To increase the gravitational settling of dust and debris contained in the exhaust gases, the dirty air chamber 35 of the tubular body 34a of the filter 34 may result in an expansion of exhaust gases from the treatment chamber 3 to result in a deceleration of the exhaust gas flow, thereby facilitating the settling of debris. To achieve an expansion of exhaust gases in the dirty air chamber, the initial section 30a of the gas exhaust duct 30 may have, near the gas inlet 41 of the filter 34, a smaller gas passage cross-section compared to the gas passage cross-section of the dirty air chamber 35. Specifically, the ratio between the gas passage cross-section of the initial section 30a of the gas exhaust duct 30 near the gas inlet 41 of the filter 34 and the gas passage cross-section of the dirty air chamber 35 ranges between 0.2 and 0.8.

Dust and debris that settle in dirty air chamber 35 may be discharged from the filter 34 by a debris discharge duct 40 radially coupled to the dirty air chamber 35 of the filter 34 from an opposite side to the initial section 30a of the gas exhaust duct 30.

As exemplarily illustrated in figure 15, the debris discharge duct may have a curvilinear shape forming a hydraulic siphon. In this context, the debris discharge duct 40 may have a main section 40a with a "U" or "V" shape, which is connected at one end to the tubular body 34a of the filter 34 via a proximal section 40b and, at the opposite end, to a terminal section 40c. Both the proximal section 40b and the terminal section 40c may extend transversely to the main section 40a of the same debris discharge duct 40. With reference to figure 17, it should be noted that the debris discharge duct 40 is located below the gas inlet 41 of the dirty air chamber 35, to which the initial section 30a of the exhaust duct 30 is connected.

To further facilitate the gravitational movement of dusty sediments present in the dirty air chamber 35 towards the debris discharge duct 40, the tubular body 34a of filter 34 may have a bottom wall 43 inclined relative to a horizontal plane, presenting an upper portion 35a located near the gas inlet 41 of the initial section 30a of the exhaust duct 30 and a lower portion 35b located near the debris discharge duct 40.

To separate the dirty air chamber 35 from the clean air chamber 36, the plant may include a filtering membrane 37 to retain dust and debris present in the exhaust gases coming from the treatment chamber 3, preventing them from reaching the clean air chamber 36. The filtering membrane 37 has a flat, mesh-like configuration and extends transversely to completely cover the gas passage section between the dirty air chamber 35 and the clean air chamber 36, ensuring that most of the exhaust gases from the treatment chamber 3 must pass through the membrane before entering the clean air chamber 36. In one example, the filtering membrane is be made of a metallic material, such as steel.

As previously mentioned and illustrated in figures 17-21, the dirty air chamber 35 and the clean air chamber 36 may be coupled together by means of a connecting body 38, which makes a mechanical connection, for example, using screws or bolts, between these chambers. The connecting body 38 may also include a slot defining a housing seat 39 to removably engage the filtering membrane 37. In an operational condition of the filter when the plant is in use and exhaust gases are being drawn from treatment chamber 3, the filtering membrane 37 may be positioned in interposition between the dirty air chamber 35 and the clean air chamber 36, intercepting the exhaust gases to filter them. Conversely, in a non-operational condition of the filter when plant 1 is not in use, the filtering membrane 37 may be fully removable from the housing seat 39 of the connecting body 38, thereby becoming detached from the tubular body 34a of the filter 34. The complete removal of the filtering membrane 37 from the connecting body allows for its replacement with a new membrane in case of wear or damage. Alternatively, using a detachable filtering membrane 37 from the tubular body 34a of the filter 34 allows a user to perform cleaning operations on the membrane itself, enabling its subsequent reuse.

To enable automatic cleaning of the filtering membrane 37, the plant may also include a cleaning nozzle 44 located inside the clean air chamber 36 of the filter 34 and positioned above the filtering membrane 37 to dispense a cleaning fluid and remove debris or impurities present on the membrane. Referring to figure 17, the cleaning nozzle 44 may be oriented transversely to the surface of the filtering membrane facing the clean air chamber 36. The control unit 50 may be connected to the cleaning nozzle 44 to selectively control the dispensing of the cleaning fluid according to a specific cleaning strategy. This strategy might include, for example, automatic cleaning of the filtering membrane 37 at regular intervals, such as periodically, when a threshold differential pressure is reached between the dirty air chamber 35 and the clean air chamber 36, or it may be performed following the receipt of a manual command from an operator. It should be noted that the system, to perform cleaning of the filtering membrane 37 upon detecting a threshold differential pressure between the dirty air chamber 35 and the clean air chamber 36, uses pressure sensors operated by appropriate control logic detailed here. In one example, the plant may include a differential pressure sensor 45 with a first and a second probe, respectively in communication with the dirty air chamber 35 and the clean air chamber 36 of the filter 34, and capable of generating a signal representing a differential pressure between the dirty air chamber 35 and the clean air chamber 36. The control unit 50 may be connected to the differential pressure sensor 45, optionally to both the first and second probes, and configured to determine a measured differential pressure value based on the signal from the differential pressure sensor 45. Upon receiving the measured differential pressure value, the control unit 50 may be configured to control the dispensing of the cleaning fluid through the cleaning nozzle 44 when the measured differential pressure value exceeds a threshold differential pressure value, optionally ranging between 5 mbar and 20 mbar, even more optionally between 10 mbar and 15 mbar.

Alternatively to using a differential pressure sensor 45, the plant may include a first and a second pressure sensor 45a, 45b, respectively in communication with the dirty air chamber 35 and the clean air chamber 36 of the filter 34 to generate signals representative of a pressure in the dirty air chamber 35 and a pressure in the clean air chamber 36, respectively. Similarly to the description above, the control unit 50 may be connected to the first and second pressure sensors 45a, 45b to control the dispensing of the cleaning fluid through the cleaning nozzle 44 when a measured differential pressure value, calculated based on the signals from the first and second pressure sensors 45a, 45b, exceeds the threshold differential pressure value.

### Process for treating organic material

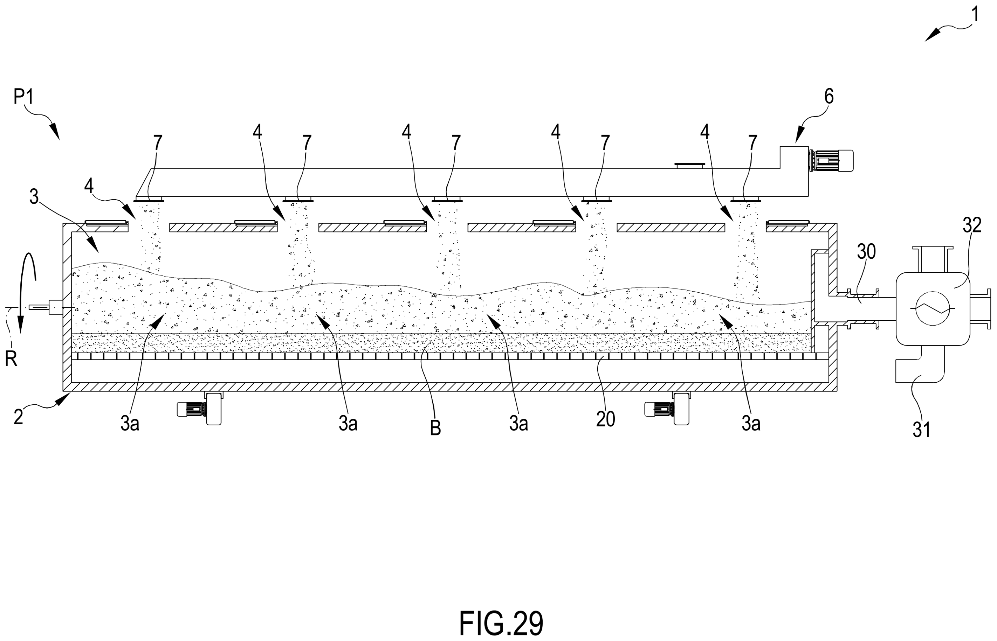

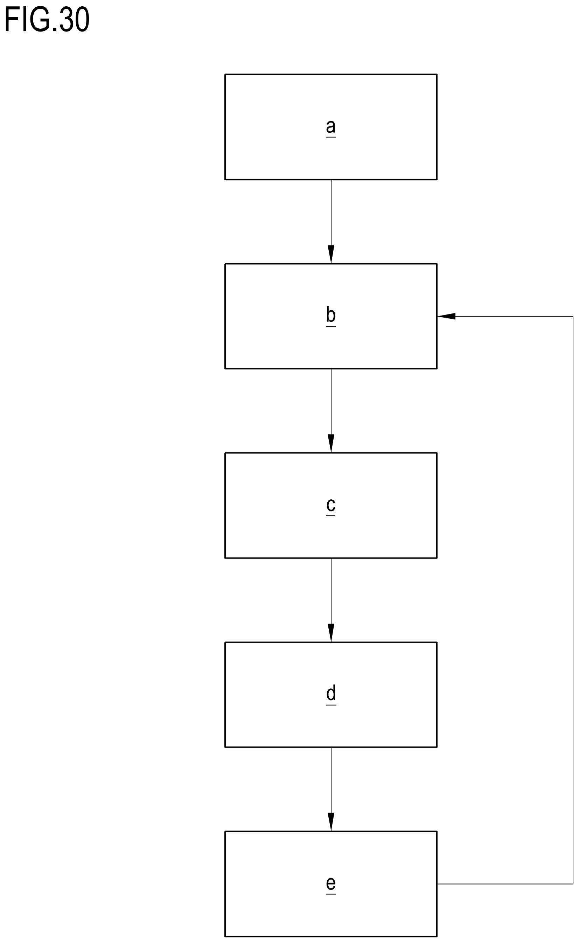

The present invention also relates to a for treating organic material performed by a plant 1 according to the above description and according to the accompanying aspects and/or claims. The following description will outline the process followed by the plant to dry the organic material present in the treatment chamber 3, with particular emphasis on the loading and unloading phases of the organic material in the treatment chamber 3. Further reference will be made to the block diagram in figure 30, which illustrates the sequence of the steps performed by the process. Additional reference is also made to figures 23-29, which provide schematic representations of the reactor 2 in the various steps of the process. As previously mentioned, the process for drying the organic material may initially involve loading the material into the treatment chamber 3 of the reactor (step "a" in the block diagram of figure 30). This loading step may, for example, involve rotating the reactor 2 to a loading position P1 where the openings 4 of the reactor 2 are aligned with the outlet mouths 7 of the loading channel 6. Following the rotation of the reactor 2 to the loading position P1, the process may involve the introduction of material through a plurality of openings 4 of the reactor 2.

Figure 23, for example, shows a schematic representation of the reactor where the loading of the material to be treated into the treatment chamber 3 has taken place. The process may then involve the introduction of feed gas through the gas inlet duct 31 to initiate the drying of the material. This step, identified as "b" in the block diagram of figure 30, is also shown in figure 23, where the channeling of the feed gas along the lower cavity 29a of the reactor 2 is highlighted.

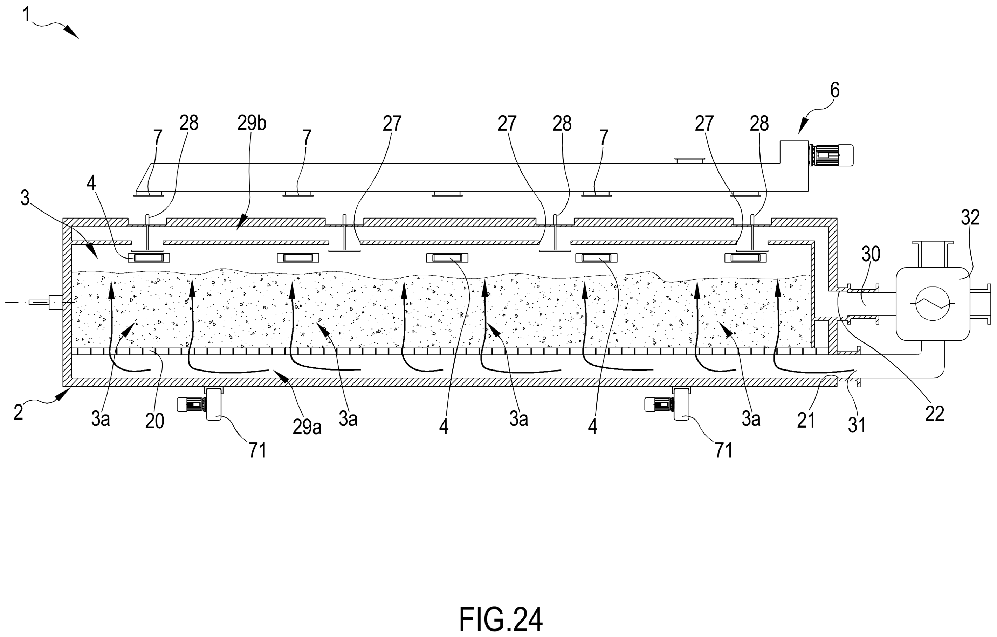

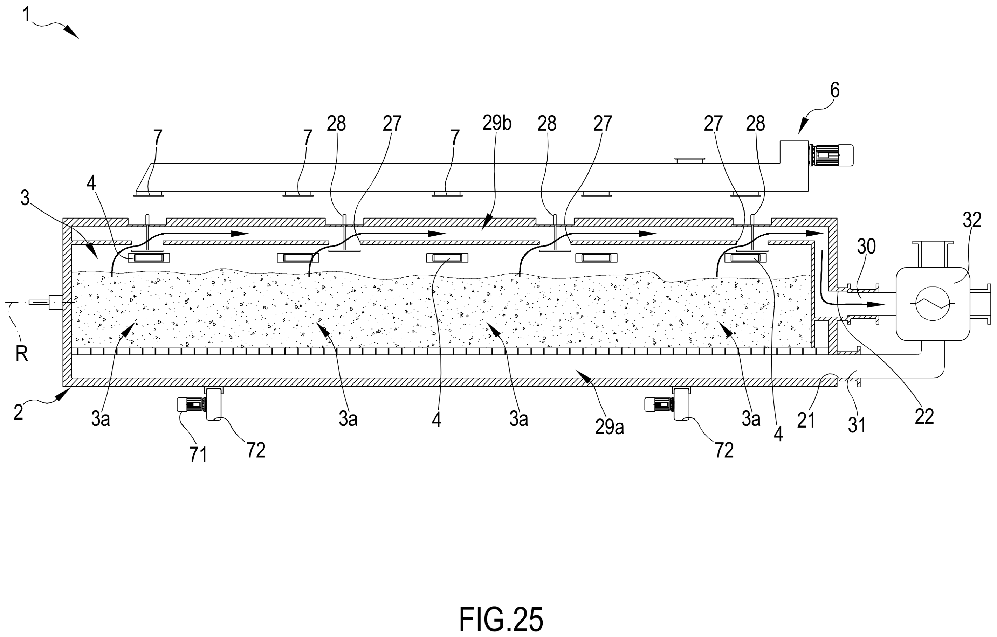

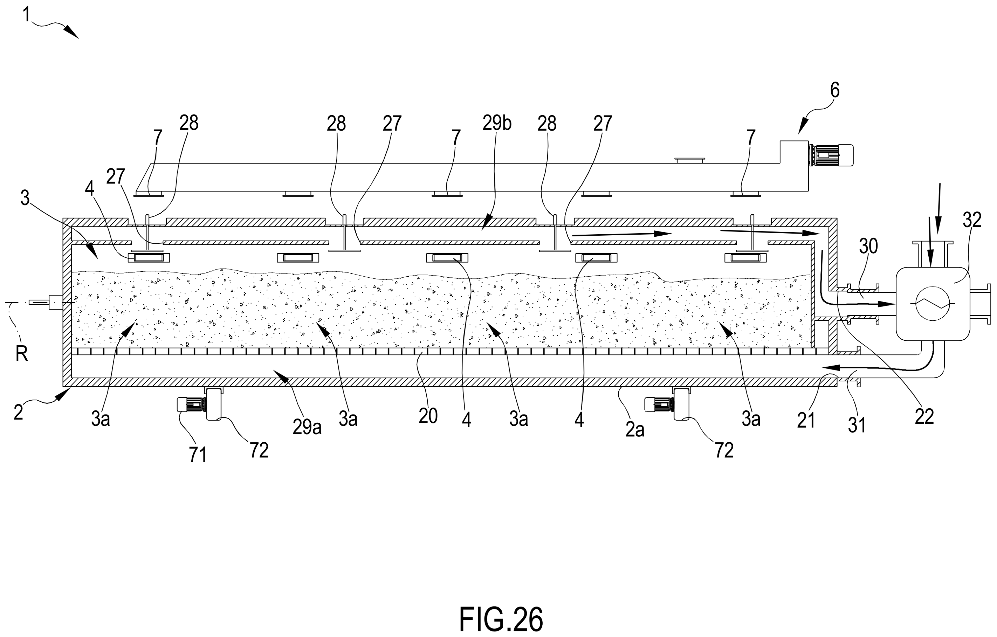

In subsequent steps, the feed gases introduced through the gas inlet duct 31 pass through the organic material to start the drying process, initiated by the bacteria naturally present in the material, heating it. This phase is shown, for example, in figure 24, where the feed gases move through the material towards an upper area of the treatment chamber 3. Figures 25 and 26 depict subsequent steps of the drying process of the organic material.

In particular, these figures show the exhaust gases, that is, gases that exit the organic material laden with moisture and optionally with dust or debris, to be expelled from the reactor through the exhaust duct 30. Furthermore, figure 26 shows a heat exchange via the heat exchanger 32, between the feed gas to be introduced into the reactor 2 and the exhaust gases to be expelled from the reactor.

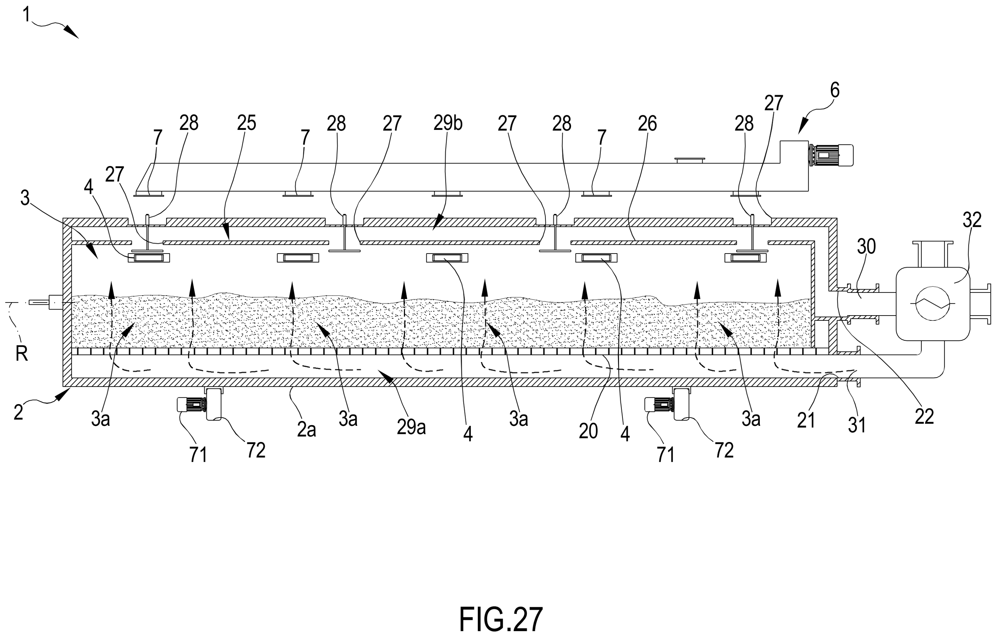

Figure 27 shows a subsequent step of the drying cycle, where additional feed gases, indicated by dashed lines passing through the organic material, have been introduced into the treatment chamber 3. Also in figure 27, a reduction in volume, and consequently in weight, of the organic material is highlighted. The material appears more compact and exhibits less stratification compared to the representations in figures 25 and 26. It should be noted that during the drying phase of the organic material, the process involves oscillating the reactor 2 around its rotation axis R, for example, discontinuously, to mix portions of material with different temperatures and humidity levels, thereby achieving a homogeneous mass of material.

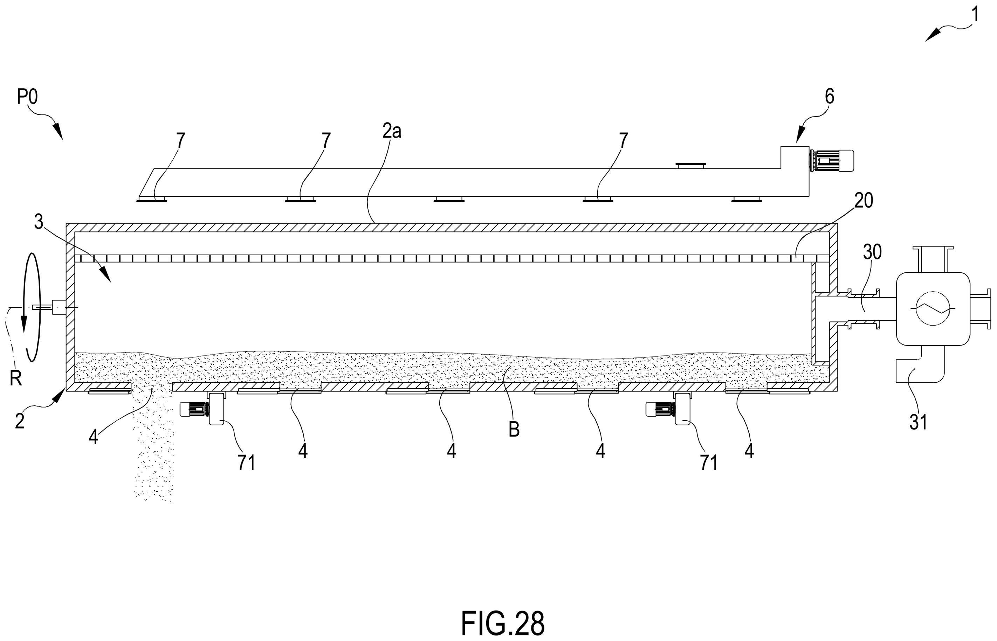

Once the drying is complete, the process may include a step for discharging the dried organic material from the reactor 2 for further processing (step "c" in the block diagram of figure 30). This step of discharging the organic material from the reactor is illustrated, for example, in figure 28, where the reactor 2 is rotated to a discharge position P2, allowing the material to exit through one of the openings 4 of the reactor 2, through which a new batch of material to be treated will subsequently be loaded.

The process, during the step of drying the organic material or subsequently the step of discharging the treated material from the reactor, may further include a step of determining at least one control parameter related to the organic material (for reference, see step "d" of the block diagram in figure 30). It should be noted that determining a control parameter related to the organic material can be associated with the drying state of that material. In one example, the control parameter may represent the temperature, humidity level, or weight of the organic material. Such a control parameter may be indicative of the general condition of the entire mass of organic material in the treatment chamber 3, or it may be representative of a condition of part of the organic material in a specific zone of the treatment chamber 3. In one example, the treatment chamber can ideally be divided into contiguous zones 3a, each representing of a volume of the treatment chamber 3 facing an opening 4 of the reactor 2. As previously mentioned in connection with the plant description, each zone 3a of the treatment chamber 3, may be equipped with temperature, humidity, and/or weight sensors to generate signals representative of a temperature, humidity, or weight of the organic material present in the specific zone 3a of the treatment chamber 3.

The division into zones 3a and the subsequent analysis of the control parameter associated with the organic material located in a given zone 3a allow for determining the variability of the organic material within the treatment chamber. This knowledge can be used, for example, in relation to a subsequent step of loading new organic material into the treatment chamber 3. For instance, if the control parameter represents the temperature of the organic material, zones 3a in the treatment chamber where material at high temperatures is present, for example, between 70°C and 80°C, may indicate the presence of dried material with low moisture content. Conversely, identifying zones 3a in the treatment chamber 3 with material at lower temperatures, for example, between 10°C and 15°C, may indicate the presence of material that has undergone only slight drying and remains highly moist. Similar considerations can be extended if the control parameter represents a humidity level or the weight of the material. Specifically, low levels of humidity or weight may indicate material with low moisture content, while high levels of humidity or weight may indicate material rich in moisture. The knowledge of the control parameter can be used to perform the loading of new organic material independently across the various zones 3a of the treatment chamber 3. In this scenario, the process may involve a step of loading new organic material into the treatment chamber 3, distributing the material differently across the various zones 3a based on the values of the control parameter in each specific zone 3a. For example, the step of loading new organic material into the treatment chamber may involve loading a quantity of material proportional to the value of the control parameter detected. In other words, the higher the temperature value in a zone 3a of the treatment chamber, the greater the amount of new organic material introduced into the chamber. Similarly, if the control parameter represents the moisture or weight of the material, the lower the moisture or weight in a zone 3a, the greater the amount of new organic material to be loaded.

Note that during the step of loading new organic material, the process initially involves rotating the reactor 2 to the loading position P1, where the openings 4 of the reactor 2 are aligned with the outlet mouths 7 of the loading channel 6. After rotating the reactor 2 to the loading position P1, the process may involve feeding material through the plurality of openings 4 of the reactor 2, potentially in a differentiated manner as described above. Once the step of loading new organic material is completed, the process involves repeating the previously described steps, starting again from step "b," which is the drying of the organic material. For reference, see the block diagram in figure 30, which shows a return line connecting step "e," related to loading new organic material, to step "b," which pertains to drying the organic material present in the treatment chamber 3.

## Claims

1. Plant for treating organic material comprising:
- a support frame (56),
- a reactor (2) configured to dry organic material, said reactor (2) having
∘ a treatment chamber (3) for the organic material and
∘ one or more openings (4) to receive organic material to be treated,
wherein the reactor (2) is mounted on the support frame (56) in such a way that it can perform a rotation about a rotational axis (R) of the reactor and a translation relative to the support frame (56),
- a sensor (59), said sensor (59) comprising:
∘ a reference component (59a),
∘ a rotating component (59b) angularly constrained to the reactor (2), wherein the reference component (59a) is configured to cooperate with the rotating component (59b) such that the sensor (59) is able to provide at least one output signal representative of a relative angular position of the reactor (2) with respect to the support frame (56),
- one or more suspension systems (57) connecting the support frame (56) to the reference component (59a) of the sensor (59) and configured to allow the reference component (59a) at least one translational movement relative to the support frame (56).

2. Plant according to the preceding claim, wherein said one or more suspension systems (57) are configured so that the translational movement of the reference component (59a) of the sensor (59) relative to the support frame (56) comprises the following components:
- an axial component along a direction parallel to or coinciding with the rotational axis (R) of the reactor (2),
- a radial component along a direction transverse to the rotational axis (R).

3. Plant according to the preceding claim, wherein said one or more suspension systems (57) are configured so that:
- said axial component is less than 20 mm,
- said radial component is less than 10 mm, optionally less than 5 mm.

4. Plant according to any one of the preceding claims, wherein said one or more suspension systems (57) are configured to limit a rotational movement of the reference component (59a) of the sensor (59) relative to the support frame (56).

5. Plant according to the preceding claim, wherein said one or more suspension systems (57) are configured to limit a rotational movement of the reference component (59a) of the sensor (59) relative to the support frame (56) to an angle less than 5°, optionally less than 0.5°.

6. Plant according to any one of the preceding claims, wherein the reactor (2) has a tubular body extending parallel to the rotational axis (R) of the reactor (2),
wherein the reactor (2) is movable by translation relative to the support frame (56):
- axially, parallel to or along said rotational axis (R), and
- radially, transverse to the rotational axis (R).

7. Plant according to any one of the preceding claims, wherein said one or more suspension systems (57) are configured to allow the translation of the reference component (59a) of the sensor (59) in synchronization with a/the translational movement of the reactor (2) while simultaneously limiting or preventing the rotation of the same reference component (59a) relative to the reactor (2);
optionally wherein the reactor (2) is movable by translation relative to the support frame (56) axially by no more than 20 mm and radially by no more than 10 mm, optionally no more than 5 mm.

8. Plant according to any one of the preceding claims, wherein the reactor (2), optionally a/the tubular body of the reactor, comprises a transmission rod (64) rigidly fixed to a terminal wall (65) of the reactor (2), wherein the transmission rod (64) emerges from a central area of the terminal wall (65) of the reactor (2) parallel to the rotational axis (R) of the reactor (2),
wherein the rotating component (59b) of the sensor (59) is carried by the transmission rod (64) and is configured to move together with the reactor (2).

9. Plant according to the preceding claim, wherein the plant includes a rotating support (68), optionally a bearing, operatively interposed between said one or more suspension systems (57) and the transmission rod (64),
wherein the rotating support (68) comprises:
- an inner ring (68a) rigidly fixed to the transmission rod (64),
- an outer ring (68b) rotatable relative to the inner ring (68a), optionally by means of rolling elements interposed between the inner ring and outer ring,
wherein the outer ring (68b) of the rotating support (68) is connected to the support frame (56) via said one or more suspension systems (57),
wherein the reference component (59a) of the sensor (59) is rigidly coupled to the outer ring (68b) of the rotating support (68),
wherein the rotating support (68) is fixed axially and angularly to the transmission rod (64) to prevent relative movement between the rotating support (68) and the transmission rod (64).

10. Plant according to any one of the preceding claims, wherein the sensor (59) comprises at least one detector of a parameter, optionally an optical, electrical, or electromagnetic parameter, related to a relative angular position of the rotating component (59b) with respect to the reference component (59a), in particular wherein said sensor is one selected from: encoder, resolver, rotary potentiometer, Hall effect angular position sensor, and rotary optical sensor.

11. Plant according to any one of the preceding claims, comprising a plurality of suspension systems (57) engaging the support frame (56) to the reference component (59a) of the sensor (59), wherein said suspension systems (57) are identical to each other, symmetrically arranged with respect to said rotational axis (R), and angularly offset from each other, optionally by an angle comprised between 80° and 160°, more optionally by an angle of 120°.

12. Plant according to any one of the preceding claims, wherein each of said one or more suspension systems (57) comprises an elastic component (73), optionally a helical spring, arranged with a respective axis of development directed transversely to the rotational axis (R) to allow the translational movement of the reference component (59a) of the sensor (59) relative to the support frame (56); and
wherein each elastic component (73) is pretensioned, optionally each helical spring is pretensioned, to limit or prevent rotation of the same reference component (59a) relative to the reactor (2).

13. Plant according to any one of the preceding claims, comprising:
- a rotating coupling device (61) to allow the transmission of electrical or pneumatic power between the reactor (2) and one or more electrical or pneumatic supply lines (69) carried by the support frame (56),
- one or more auxiliary suspension systems (63) connecting the support frame (56) to the rotating coupling device (61),
wherein the rotating coupling device (61) comprises:
- an internal element (61a) carried by the reactor (2) and moving together with it, said internal element being electrically or pneumatically connected to said one or more supply lines,
- an external element (61b) connected to the support frame (56) via said one or more auxiliary suspension systems (63) and coupled to the internal element to allow the transmission of electrical or pneumatic power from the external element to the internal element,
wherein said one or more auxiliary suspension systems (63) allow a translational movement of the rotating coupling device (61) relative to the support frame (56) in the following directions:
- axially, parallel to or along said rotational axis (R), and
- radially, transverse to the rotational axis (R),
wherein said one or more auxiliary suspension systems (63) are configured to limit a rotational movement of the rotating coupling device (61) relative to the support frame (56);
optionally wherein said one or more auxiliary suspension systems (63) are configured to accommodate the translation of the rotating coupling device (61) in synchronization with the translational movement of the reactor (2) while simultaneously limiting the rotation of the external element (61b) of the rotating coupling device (61) relative to the reactor (2).

14. Plant according to the preceding claim, wherein each of said one or more auxiliary suspension systems (63) comprises an elastic component (74), optionally a helical spring, arranged with a respective axis of development directed transversely to the rotational axis (R) to allow the translational movement of the rotating coupling device (61) relative to the support frame (56),
wherein the plant comprises a plurality of auxiliary suspension systems (63) engaging the support frame (56) to the rotating coupling device (61), wherein said auxiliary suspension systems (63) are angularly offset from each other, optionally by an angle comprised between 140° and 220°, more optionally by an angle of 180°,
wherein the auxiliary suspension systems (63) are identical to each other and symmetrically arranged with respect to said rotational axis (R),
in particular wherein the rotating coupling device (61) is selected from: a contact ring, a rotary transformer, an optical ring, or a fluidic rotary joint.

15. Plant according to any one of the preceding claims, comprising a motorization (71), optionally of the electrical or hydraulic type, carried by or integral with the support frame (56) and acting on an external surface of the reactor (2) to rotate the reactor itself relative to the support frame (56), wherein said motorization (71) has a plurality of motorized rollers (72), each optionally driven by a respective electric or hydraulic motor, positioned peripherally with respect to the external surface of the reactor (2),
wherein the sensor (59) is configured to generate said output signal representative of a relative angular position of the reactor (2) with respect to the support frame (56),
wherein the plant further comprises a control unit (50) connected to the sensor (59) and configured to:
- receive the output signal,
- determine a measured rotation value of the reactor (2) with respect to the support frame (56) based on the output signal,
- control the motorization (71), optionally each motorized roller (72) of the motorization (71), based on said measured rotation value.
